(19) Europäisches Patentamt European Patent Office Office européen des brevets

(11) **EP 4 596 166 A1**

(12) **EUROPEAN PATENT APPLICATION**
published in accordance with Art. 153(4) EPC

(43) Date of publication:
**06.08.2025 Bulletin 2025/32**

(21) Application number: **22961043.1**

(22) Date of filing: **30.09.2022**

(51) International Patent Classification (IPC):
***B23K 35/30*** (2006.01)

(52) Cooperative Patent Classification (CPC):
**B23K 35/3073; B23K 35/02; B23K 35/0261;**
**B23K 35/0266; B23K 35/30; B23K 35/3053;**
**B23K 35/3066; B23K 35/3602; B23K 35/3607;**
**B23K 35/362; B23K 35/368**

(86) International application number:
**PCT/JP2022/036864**

(87) International publication number:
**WO 2024/069984 (04.04.2024 Gazette 2024/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **MATSUO, Hajime**
  **Tokyo 100-8071 (JP)**
• **KAMO, Takahiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING COATED ARC WELDING ROD AND WELDING JOINT**

(57) A shielded metal arc welding rod including a core wire made of steel and a flux coating the core wire, in which a chemical component of the core wire includes C: from 0% to 0.650%, Si: from 0.03% to 0.50%, Mn: from 2.1% to 30.0%, P: from 0% to 0.050%, S: from 0% to 0.050%, Cu: from 0% to 5.0%, Ni: from 1.0% to 30.0%, Cr: from 0% to 10.0%, Mo: from 0% to 10.0%, Nb: from 0% to 1.00%, V: from 0% to 1.00%, Co: from 0% to 1.00%, Pb: from 0% to 1.00%, Sn: from 0% to 1.00%, Al: from 0% to 0.10%, Ti: from 0% to 0.10%, B: from 0% to 0.1000%, N: from 0% to 0.5000%, balance: Fe and impurities, (Mn + Ni) is 5.0% or more, (Mn + Ni + Cr) is 15.0% or more, and a fraction of fcc is 70% or more.

**Description**

BACKGROUND

Technical Field

The present disclosure relates to a shielded metal arc welding rod and a method of manufacturing a welded joint.

Background Art

In recent years, with tougher regulations of carbon dioxide emission due to global warming problem, demand for hydrogen fuel that emits no carbon dioxide as compared with petroleum, coal, and the like, natural gas that emits less carbon dioxide, and the like has increased. Along with this, demand for construction of liquid hydrogen tanks, liquid carbon dioxide tanks, LNG tanks, and the like used in ships, the ground, and the like is also increasing worldwide. For steel materials used for liquid hydrogen tanks, liquid carbon dioxide tanks, LNG tanks, and the like, Ni-based low temperature steels containing from 6% to 9% of Ni are used from the demand for securing toughness at an extremely low temperature of -196°C.

For welding these Ni-based low temperature steels, an austenitic shielded metal arc welding rod with which a weld metal having excellent low-temperature toughness can be obtained is used. The shielded metal arc welding rod is mainly designed to have a Ni content of 70%.

For example, as the welding material having a Ni content of 70%, Patent Literature 1 discloses a "flux-cored wire containing, as a core wire, a Ni-based alloy, a Ni content being from 35% to 70%, the flux containing $TiO_2$, $SiO_2$, and $ZrO_2$ in a total amount of 4.0 mass% or more with respect to a total mass of the wire, further containing a Mn oxide in an amount of from 0.6 mass% to 1.2 mass% in terms of $MnO_2$, and when contents of $TiO_2$, $SiO_2$, $ZrO_2$, and $MnO_2$ (converted amount) are represented, by mass%, as $[TiO_2]$, $[SiO_2]$, $[ZrO_2]$, and $[MnO_2]$, respectively, $[TiO_2]/[ZrO_2]$ being from 2.3 to 3.3, $[SiO_2]/[ZrO_2]$ being from 0.9 to 1.5, and $([TiO_2] + [SiO_2] + [ZrO_2])/[MnO_2]$ being from 5 to 13.

Patent Literature 1: Japanese Patent Application Laid-Open (JP-A) No. 2008-246507

SUMMARY OF INVENTION

Technical Problem

However, a welding material designed to have a Ni content of 70% for securing low-temperature toughness of a weld metal is very expensive, and an inexpensive wire is required.

Although expensive Ni is known as an austenite stabilizing element, inexpensive Mn has a similar effect. Therefore, when the Ni content is reduced and the Mn content is increased, a weld metal which is inexpensive and has excellent low-temperature toughness can be obtained. However, only by increasing Mn, a large amount of fumes are generated. When the amount of fumes increases, visibility of weld metal or an arc state deteriorates, which causes welding defects.

Therefore, an object of the present invention is to provide a shielded metal arc welding rod which is inexpensive and with which a weld metal having excellent low-temperature toughness can be obtained and the amount of fumes generated can be reduced, and a method of manufacturing a welded joint using the shielded metal arc welding rod.

Solution to Problem

Means for solving the problems includes the following aspects.

<1> A shielded metal arc welding rod including:

a core wire made of steel; and
a flux coating the core wire,
in which a chemical component of the core wire consists of, by mass% with respect to a total mass of the core wire:

C: from 0% to 0.650%,
Si: from 0.03% to 0.50%,
Mn: from 2.1% to 30.0%,
P: from 0% to 0.050%,
S: from 0% to 0.050%,

Cu: from 0% to 5.0%,
Ni: from 1.0% to 30.0%,
Cr: from 0% to 10.0%,
Mo: from 0% to 10.0%,
Nb: from 0% to 1.00%,
V: from 0% to 1.00%,
Co: from 0% to 1.00%,
Pb: from 0% to 1.00%,
Sn: from 0% to 1.00%,
Al: from 0% to 0.10%,
Ti: from 0% to 0.10%,
B: from 0% to 0.1000%,
N: from 0% to 0.5000%,
O: from 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc in the core wire as determined by a magnetic induction method is 70% or more.

<2> The shielded metal arc welding rod described in <1>, in which a mass ratio (Ni/Mn) of the content of the Mn and the content of the Ni is 0.10 or more.

<3> The shielded metal arc welding rod described in <2>, in which the mass ratio (Ni/Mn) is 1.00 or more.

<4> The shielded metal arc welding rod described in any one of <1> to <3>, in which a content of the Ti is Ti: from 0.003% to 0.10%.

<5> The shielded metal arc welding rod described in any one of <1> to <4>, in which a chemical component of the flux includes, by mass% with respect to a total mass of the flux,

a total of $TiO_2$-equivalent values of a Ti oxide: from 0% to 25.00%,
a total of $SiO_2$-equivalent values of a Si oxide: from 0% to 25.00%,
a total of $ZrO_2$-equivalent values of a Zr oxide: from 0% to 5.00%,
a total of $Al_2O_3$-equivalent values of an Al oxide: from 0% to 5.00%,
a total of MgO-equivalent values of a Mg oxide: from 0% to 5.00%,
a total of CaO-equivalent values of a Ca oxide: from 0% to 25.00%,
a total of $Na_2O$-equivalent values of a Na oxide: from 0% to 5.00%,
a total of $K_2O$-equivalent values of a K oxide: from 0% to 5.00%,
$CaF_2$: from 0% to 30.00%,
$CaCO_3$: from 0% to 60.00%,
$BaCO_3$: from 0% to 15.00%,
$MgCO_3$: from 0% to 15.00%, and
$Li_2CO_3$: from 0% to 15.00%,
wherein a metal component in the chemical component of the flux consists of, by mass% with respect to the total mass of the flux:

C: from 0.020% to 5.000%,
Si: from 0% to 5.00%,
Mn: from 0% to 30.00%,
P: from 0% to 0.050%,
S: from 0% to 0.050%,
Cu: from 0% to 20.0%,
Ni: from 0% to 20.0%,
Cr: from 0% to 20.0%,
Mo: from 0% to 10.0%,
Nb: from 0% to 5.00%,
V: from 0% to 5.0%,
Co: from 0% to 1.00%,

Pb: from 0% to 1.00%,
Sn: from 0% to 1.00%,
W: from 0% to 20.0%,
Mg: from 0% to 5.00%,
Al: from 0% to 5.0%,
Ca: from 0% to 5.00%,
Ti: from 0% to 5.000%,
B: from 0% to 5.0000%,
REM: from 0% to 5.00%,
Bi: from 0% to 5.000%,
N: from 0% to 5.0000%, and
balance: Fe and impurities, and
wherein a total content of the $CaCO_3$, the $BaCO_3$, the $MgCO_3$, and the $Li_2CO_3$ is 5.00% or more.

<6> The shielded metal arc welding rod described in <5>, in which a total (Mn + Ni) of a content of the Mn and a content of the Ni in the flux is 1.00% or more.

<7> The shielded metal arc welding rod described in <5> or <6>, in which a sum X of the total of $TiO_2$-equivalent values of the Ti oxide, the total of $SiO_2$-equivalent values of the Si oxide, the total of $ZrO_2$-equivalent values of the Zr oxide, the total of $Al_2O_3$-equivalent values of the Al oxide, the total of MgO-equivalent values of the Mg oxide, the total of CaO-equivalent values of the Ca oxide, the total of $Na_2O$-equivalent values of the Na oxide, the total of $K_2O$-equivalent values of the K oxide, a content of the $CaF_2$, a content of the $CaCO_3$, a content of the $BaCO_3$, a content of the $MgCO_3$, and a content of the $Li_2CO_3$ is 94.98% or less.

<8> The shielded metal arc welding rod described in any one of <1> to <7>, in which an average thickness of the flux is 5.0 mm or less.

<9> A method of manufacturing a welded joint, comprising a step of welding a steel material by using the shielded metal arc welding rod described in any one of <1> to <8>. Advantageous Effects of Invention

According to the disclosure, it is possible to provide a shielded metal arc welding rod which is inexpensive and with which a weld metal having excellent low-temperature toughness can be obtained and the amount of fumes generated can be reduced, and a method of manufacturing a welded joint using the shielded metal arc welding rod.

DESCRIPTION OF EMBODIMENTS

An exemplary embodiment of the disclosure will be described.

In the present specification, a numerical range that has been indicated by use of "to" in a case in which "more than" and "less than" are not attached to numerical values which are described before and after "to" means a range including these numerical values as a lower limit value and an upper limit value. A numerical range in a case in which "more than" or "less than" is attached to the numerical values which are described before and after "to" means a range not including these numerical values as the lower limit value or the upper limit value.

In a numerical range described in a stepwise manner in the present specification, an upper limit value in one stepwise numerical range may be replaced with an upper limit value in another numerical range described in a stepwise manner, or may be replaced with a value shown in Examples. A lower limit value in one stepwise numerical range may be replaced with a lower limit value in another numerical range described in a stepwise manner, or may be replaced with a value shown in Examples.

As for the content, "%" means "% by mass".

"0 to" as the content (%) means that the component is an optional component and is not necessarily contained.

<Shielded Metal Arc Welding Rod>

A shielded metal arc welding rod according to the disclosure (hereinafter, simply referred to as "welding rod" in some cases) includes a core wire made of steel and a flux coating the core wire. In the shielded metal arc welding rod according to the disclosure, a chemical component of the core wire has a predetermined composition.

With the above configuration, the shielded metal arc welding rod according to the disclosure is a welding rod which is inexpensive and with which a weld metal having excellent low-temperature toughness can be obtained and the amount of fumes generated can be reduced.

The shielded metal arc welding rod according to the disclosure has been found from the following findings.

The inventors have studied a technique for obtaining a welding rod in which the low-temperature toughness of the weld metal is improved and the amount of fumes generated can be reduced even when the Ni content is reduced and the Mn content is increased. As a result, the following findings were obtained.

The fume is an object obtained by releasing metal vapor generated from the melt pool into the air by arc force and solidifying the metal vapor. By controlling the arc force, the amount of fumes generated can be reduced. The arc force varies depending not only on the welding conditions but also on the components of the core wire. Specifically, by controlling the contents of Ni and Mn contained in the core wire and functioning as austenite stabilizing elements, the Ni content in the entire welding rod is reduced, and even when the Mn content is increased, the arc force is relaxed, a weld metal having excellent low-temperature toughness can be obtained, and the amount of fumes generated can also be reduced.

From the above findings, it is found that the shielded metal arc welding rod according to the disclosure is a welding rod which is inexpensive and with which a weld metal having excellent low-temperature toughness can be obtained and the amount of fumes generated can be reduced.

The inventors have studied a metal carbonate, an oxide, Mn, and Ni in the flux, and as a result, have found that the low-temperature toughness is further improved by controlling the amounts thereof.

From the above findings, it is found that the shielded metal arc welding rod according to the disclosure preferably contains an oxide, Mn, and Ni in predetermined amounts, thereby obtaining a welding rod which is inexpensive and with which a weld metal having more excellent low-temperature toughness can be obtained and the amount of fumes generated can be reduced.

Hereinafter, the reasons for limiting the requirements (including optional requirements) constituting the shielded metal arc welding rod according to the disclosure will be specifically described.

(Chemical Component of Core Wire)

Hereinafter, the chemical component of the core wire will be described in detail.

In the description of the chemical component of the core wire, "%" means "by mass% with respect to the total mass of the chemical components of the core wire" unless otherwise specified.

The chemical component of the core wire consists of

C: from 0% to 0.650%,
Si: from 0.03% to 0.50%,
Mn: from 2.1% to 30.0%,
P: from 0% to 0.050%,
S: from 0% to 0.050%,
Cu: from 0% to 5.0%,
Ni: from 1.0% to 30.0%,
Cr: from 0% to 10.0%,
Mo: from 0% to 10.0%,
Nb: from 0% to 1.00%,
V: from 0% to 1.00%,
Co: from 0% to 1.00%,
Pb: from 0% to 1.00%,
Sn: from 0% to 1.00%,
Al: from 0% to 0.10%,
Ti: from 0% to 0.10%,
B: from 0% to 0.1000%,
N: from 0% to 0.5000%,
O: from 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, a content of the Ni, and a content of the Cr is 15.0% or more, and
a fraction of fcc in the core wire as determined by a magnetic induction method is 70% or more.

(C: from 0% to 0.650%)

C is an element that generates spatters. For reducing spatters, the lower the C content of the core wire is, the more advantageous it is. C is also an interstitial solid solution strengthening element. When the C content of the core wire is excessive, the core wire becomes hard, and core wire processing becomes difficult. Spatters also increase.

Therefore, the C content of the core wire is set to from 0% to 0.650%.

However, in order to set the C content of the core wire to 0%, the C removal cost increases. There is a concern that the C content of the welding rod is insufficient and the strength of the weld metal is insufficient. Therefore, when the C content of the core wire is low, the C content of the flux needs to be increased. Therefore, the lower limit of the C content of the core wire may be set to 0.003%, 0.005%, or 0.008%.

The upper limit of the C content in the core wire is preferably 0.600%, 0.500%, 0.400%, 0.300%, 0.200%, less than 0.200%, 0.190%, 0.180%, 0.150%, or 0.120%.

(Si: from 0.03% to 0.50%)

Si is a deoxidizing element. When the Si content of the core wire is too low, the P content of the core wire increases.

Si has low solid solubility relative to an austenite phase, and as the Si content becomes more increased, a brittle phase, such as an intermetallic compound and δ ferrite, is more likely to be generated at a high temperature, which deteriorates high-temperature ductility.

Therefore, the Si content of the core wire is set to from 0.03% to 0.50%.

The lower limit of the Si content of the core wire is preferably 0.04%, 0.05%, or 0.08%.

The upper limit of the Si content of the core wire is preferably less than 0.50%, 0.48%, 0.45%, 0.40%, 0.35%, 0.30%, or 0.20%.

(Mn: from 2.1% to 30.0%)

Mn is an element that causes an increase in the amount of fumes generated. For reducing the amount of fumes generated, the lower Mn content of the core wire is, the more advantageous it is. When Mn is excessively added, the stacking fault energy decreases and the toughness deteriorates.

Mn is an austenite stabilizing element. When the Mn content of the core wire is too low, the Mn content of the entire welding rod is insufficient, austenitization of the weld metal hardly proceeds, and the low-temperature toughness is deteriorated. It is necessary to excessively increase the Mn content of the flux in order to secure the low-temperature toughness of the weld metal.

Therefore, the Mn content of the core wire is set to from 2.1% to 30.0%.

The lower limit of the Mn content of the core wire is preferably 3.0%, 5.0%, more than 5.0%, 5.2%, more than 6.0%, 6.2%, 7.0%, more than 7.0%, 7.2%, more than 10.0%, or 10.2%.

The upper limit of the Mn content of the core wire is preferably 25.0%, 20.0%, 19.0%, 18.0%, 15.0%, or 12.0%.

(P: from 0% to 0.050%)

Since P is an impurity element and reduces the toughness of the weld metal, it is preferable to reduce the P content of the core wire as much as possible. Therefore, the lower limit of the P content of the core wire is set to 0%. However, from the viewpoint of reducing the costs for removing P, the P content of the core wire may be 0.003% or more.

When the P content of the core wire is 0.050% or less, an adverse effect of P on the toughness is within an acceptable range.

Therefore, the P content of the core wire is set to from 0% to 0.050%.

In order to effectively suppress the decrease in toughness of the weld metal, the P content of the core wire is preferably 0.040% or less, 0.030% or less, 0.020% or less, 0.015% or less, or 0.010% or less.

(S: from 0% to 0.050%)

Since S is an impurity element and reduces the toughness of the weld metal, it is preferable to reduce the S content of the core wire as much as possible. Therefore, the lower limit of the S content of the core wire is set to 0%. However, from the viewpoint of reducing the costs for removing S, the S content of the core wire may be 0.003% or more.

When the S content of the core wire is 0.050% or less, an adverse effect of S on the toughness is within an acceptable range.

Therefore, the S content of the core wire is set to from 0% to 0.050%.

In order to effectively suppress the decrease in toughness of the weld metal, the S content of the core wire is preferably 0.040% or less, 0.030% or less, 0.020% or less, 0.015% or less, or 0.010% or less.

(Cu: from 0% to 5.0%)

Cu is a precipitation strengthening element and may be contained in the core wire in order to improve the strength of the weld metal. When the Cu content of the core wire is excessive, the above effect is saturated. When the Cu content of the core wire is excessive, the core wire becomes hard, and core wire processing becomes difficult.

Therefore, the Cu content of the core wire is set to from 0% to 5.0%.

The lower limit of the Cu content of the core wire is preferably 0.3%, 0.5%, or 0.7%.

The upper limit of the Cu content of the core wire is preferably 4.5%, 4.0%, or 3.5%.

(Ni: from 1.0% to 30.0%)

Ni is an austenite stabilizing element. When the Ni content of the core wire is too low, the Ni content of the entire welding rod is insufficient, austenitization of the weld metal hardly proceeds, and the low-temperature toughness is deteriorated. It is necessary to excessively increase the Ni content of the flux in order to secure the low-temperature toughness of the weld metal.

When the Ni content of the core wire is increased, the cost of the welding rod is increased.

Therefore, the Ni content of the core wire is set to from 1.0% to 30.0%.

The lower limit of the Ni content of the core wire is preferably 2.0%, 3.0%, 5.0%, more than 6.0%, 6.2%, 7.0%, more than 8.0%, or 8.2%.

The upper limit of the Ni content of the core wire is preferably 28.0%, 26.0%, 24.0%, 22.0%, 20.0%, 19.0%, 18.0%, 15.0%, or 12.0%.

(Cr: from 0% to 10.0%)

Cr is an austenite stabilizing element and may be contained in the core wire in order to improve the low-temperature toughness of the weld metal.

When the Cr content of the core wire is excessive, a martensite structure is formed in the core wire, and core wire processing becomes difficult. When the Cr content of the core wire is excessive, the amount of a low-melting-point compound in the molten metal increases, and the solid-liquid coexisting temperature range of the molten metal is widened, so that hot cracking is likely to occur.

Therefore, the Cr content of the core wire is set to from 0% to 10.0%.

The lower limit of the Cr content of the core wire is preferably 0.01%, 0.02%, 1.0%, 2.0%, or 3.0%.

The upper limit of the Cr content of the core wire is preferably 9.0%, 8.0%, less than 8.0%, 7.8%, 7.0%, less than 6.0%, or 5.8%.

(Mo: from 0% to 10.0%)

Mo is a precipitation strengthening element and may be contained in the core wire in order to improve the strength of the weld metal. When the Mo content of the core wire is excessive, the core wire becomes hard, and core wire processing becomes difficult. When the Mo content of the core wire is excessive, the strength of the weld metal becomes excessive, and the low-temperature toughness is decreased.

Therefore, the Mo content of the core wire is set to from 0% to 10.0%.

The lower limit of the Mo content of the core wire is preferably 1.0%, 2.0%, or 3.0%.

The upper limit of the Mo content of the core wire is preferably 9.0%, 8.0%, or 7.0%.

(Nb: from 0% to 1.00%)

Nb is an element that forms a carbide in the weld metal and increases the sheath of the weld metal, and thus may be contained in the core wire.

When the Nb content of the core wire is excessive, the core wire becomes hard, and core wire processing becomes difficult. When the Nb content of the core wire is excessive, there is a concern that the hot cracking of the weld metal occurs.

Therefore, the Nb content of the core wire is set to from 0% to 1.00%.

The lower limit of the Nb content of the core wire is preferably 0.01%, 0.05%, 0.10%, 0.15%, or 0.20%.

The upper limit of the Nb content of the core wire is preferably 0.95%, 0.90%, 0.85%, or 0.80%.

(V: from 0% to 1.00%)

V is an element that forms a carbonitride in the weld metal and increases the sheath of the weld metal, and thus may be contained in the core wire.

When the V content of the core wire is excessive, the core wire becomes hard, and core wire processing becomes difficult. When the V content of the core wire is excessive, there is a possibility that the hot cracking of the weld metal occurs.

Therefore, the V content of the core wire is set to from 0% to 1.00%.

The lower limit of the V content of the core wire is preferably 0.01%, 0.05%, 0.10%, 0.15%, or 0.20%.

The upper limit of the V content of the core wire is preferably 0.95%, 0.90%, 0.85%, or 0.80%.

(Co: from 0% to 1.00%)

Since Co is an element that increases the strength of the weld metal by solid solution strengthening, Co may be contained in the core wire.

When the Co content of the core wire is excessive, the core wire becomes hard, and core wire processing becomes difficult. When the Co content of the core wire is excessive, the ductility of the weld metal is decreased, and the toughness cannot be secured.

Therefore, the Co content of the core wire is set to from 0% to 1.00%.

The lower limit of the Co content of the core wire is preferably 0.01%, 0.05%, 0.10%, 0.15%, or 0.20%.

The upper limit of the Co content of the core wire is preferably 0.95%, 0.90%, 0.85%, or 0.80%.

(Pb: from 0% to 1.00%)

Since Pb has an effect of improving the toe moldability between the steel material as a base material and the weld metal to improve the machinability of the weld metal, Pb may be contained in the core wire.

When the Pb content of the core wire is excessive, an arc state is deteriorated to increase spatters.

Therefore, the Pb content of the core wire is set to from 0% to 1.00%.

The lower limit of the Pb content of the core wire is preferably 0.01%, 0.05%, 0.10%, 0.15%, or 0.20%.

The upper limit of the Pb content of the core wire is preferably 0.95%, 0.90%, 0.85%, or 0.80%.

(Sn: from 0% to 1.00%)

Since Sn is an element that improves the corrosion resistance of the weld metal, Sn may be contained in the core wire.

When the Sn content of the core wire is excessive, there is a concern that cracking may occur in the weld metal.

Therefore, the Sn content of the core wire is set to from 0% to 1.00%.

The lower limit of the Sn content of the core wire is preferably 0.01%, 0.05%, 0.10%, 0.15%, or 0.20%.

The upper limit of the Sn content of the core wire is preferably 0.95%, 0.90%, 0.85%, or 0.80%.

(Al: from 0% to 0.10%)

Al is a deoxidizing element and may be contained in the core wire in order to suppress welding defects and improve the cleanliness of the weld metal.

When the Al content of the core wire is excessive, coarse inclusions are generated in the core wire, and core wire processing becomes difficult. When the Al content of the core wire is excessive, Al may form a nitride or an oxide in the weld metal to decrease the low-temperature toughness of the weld metal.

Therefore, the Al content of the core wire is set to from 0% to 0.10%.

The lower limit of the Al content of the core wire is preferably 0.01%, 0.02%, or 0.03%.

The upper limit of the Al content of the core wire is preferably 0.09%, 0.08%, or 0.07%.

(Ti: from 0% to 0.10%)

Ti is a deoxidizing element and may be contained in the core wire in order to suppress welding defects and improve the cleanliness of the weld metal.

When the Ti content of the core wire is excessive, coarse inclusions are generated in the core wire, and core wire processing becomes difficult. When the Ti content of the core wire is excessive, a carbide may be generated in the weld metal to deteriorate the toughness of the weld metal.

Therefore, the Ti content of the core wire is set to from 0% to 0.10%.

The lower limit of the Ti content of the core wire is preferably 0.003%, 0.01%, 0.02%, or 0.03%.

The upper limit of the Ti content of the core wire is preferably 0.09%, 0.08%, or 0.07%.

(B: from 0% to 0.1000%)

B is an austenite stabilizing element and is also an interstitial solid solution strengthening element, and may be contained in the core wire in order to improve the low-temperature toughness and strength of the weld metal.

When the B content of the core wire is excessive, the core wire becomes hard, and core wire processing becomes difficult. When the B content of the core wire is excessive, $M_{23}(C,B)_6$ precipitates, which causes toughness deterioration.

Therefore, the B content of the core wire is set to from 0% to 0.1000%.

The lower limit of the B content of the core wire is preferably 0.0005%, 0.0010%, or 0.0020%.

The upper limit of the B content of the core wire is preferably 0.0800%, 0.0500%, or 0.0100%.

(N: from 0% to 0.5000%)

N is an austenite stabilizing element and is also an interstitial solid solution strengthening element, and may be contained in the core wire in order to improve the low-temperature toughness and strength of the weld metal.

When the N content of the core wire is excessive, the core wire becomes hard, and core wire processing becomes difficult. When the N content of the core wire is excessive, the occurrence of blowing increases, which causes welding defects.

Therefore, the N content of the core wire is set to from 0% to 0.5000%.

The lower limit of the N content of the core wire is preferably 0.0010%, 0.0100%, or 0.0500%.

The upper limit of the N content of the core wire is preferably 0.4500%, 0.4000%, or 0.3500%.

(O: from 0% to 0.0050%)

O may be contained in the core wire as an impurity. However, when the O content is excessive, toughness and ductility in the weld metal are deteriorated, and thus the upper limit of the O content of the core wire is set to 0.0050% or less.

The upper limit of the O content of the core wire is preferably 0.0040% or 0.0030%.

From the viewpoint of suppressing an increase in manufacturing cost due to a decrease in the O content, the lower limit of the O content of the core wire is preferably 0.0003% or 0.0005%.

(Balance: Fe and Impurities)

Other remainder components in the chemical component of the core wire are Fe and impurities.

The impurities mean raw materials such as minerals or scraps or components to be incorporated by various factors of a manufacturing process when the core wire is industrially manufactured, which are acceptable within a range not adversely affecting the characteristics of the welding rod.

(Total (Mn + Ni) of Mn Content and Ni Content)

Each of Mn and Ni is an austenite stabilizing element and improve the low-temperature toughness of the weld metal. Since Ni is an expensive metal, in order to improve the low-temperature toughness of the weld metal while suppressing the cost of the welding rod, the total (Mn + Ni) of the Mn content and the Ni content is set to 5.0% or more while each of the Mn content and the Ni content in the core wire satisfies the above range.

The total (Mn + Ni) of the Mn content and the Ni content in the core wire is preferably 7.0% or more, 10.0% or more, or 15.0% or more.

Mn is an element that causes an increase in the amount of fumes generated. When Mn is excessively added, the stacking fault energy decreases and the toughness deteriorates. Therefore, from the viewpoint of reducing the amount of fumes generated while suppressing the cost of the welding rod and improving the low-temperature toughness of the weld metal, the total (Mn + Ni) of the Mn content and the Ni content is preferably set to 37.0% or less while each of the Mn content and the Ni content in the core wire satisfies the above range.

The total (Mn + Ni) of the Mn content and the Ni content in the core wire is more preferably 35.0% or less, 32.0% or less, or 30.0% or less.

(Total (Mn + Ni + Cr) of Mn Content, Ni Content, and Cr Content)

Each of Mn, Ni, and Cr is an austenite stabilizing element and improve the low-temperature toughness of the weld metal. Since Ni is an expensive metal, in order to improve the low-temperature toughness of the weld metal while suppressing the cost of the welding rod, the total (Mn + Ni + Cr) of the Mn content, the Ni content, and the Cr content is set to 15.0% or more while each of the Mn content, the Ni content, and the Cr content in the core wire satisfies the above range.

The total (Mn + Ni + Cr) of the Mn content, the Ni content, and the Cr content in the core wire is preferably 17.0% or more, 19.0% or more, 20.0% or more, 22.0% or more, 24.0% or more, 26.0% or more, 28.0% or more, or 30.0% or more.

Mn is an element that causes an increase in the amount of fumes generated. When Mn is excessively added, the stacking fault energy decreases and the toughness deteriorates. Cr is an element that forms a martensite structure, and affects the processability of the core wire. Cr causes an increase in the amount of a low-melting-point compound in the molten metal. Therefore, from the viewpoint of reducing the amount of fumes generated while suppressing the cost of the welding rod and improving the low-temperature toughness of the weld metal, enhancing the core wire processability, and reducing the amount of a low-melting-point compound generated in the molten metal, the total (Mn + Ni + Cr) of the Mn content, the Ni content, and the Cr content is preferably set to 47.0% or less while each of the Mn content, the Ni content, and the Cr content in the core wire satisfies the above range.

The total (Mn + Ni + Cr) of the Mn content, the Ni content, and the Cr content in the core wire is more preferably 45.0% or less, 42.0% or less, or 40.0% or less.

(Mass Ratio (Ni/Mn) of Mn Content and Ni Content)

Each of Mn and Ni is an austenite stabilizing element and improve the low-temperature toughness of the weld metal. Ni is an expensive metal, and Mn is an element that causes an increase in the amount of fumes generated. When Mn is excessively added, the stacking fault energy decreases and the toughness deteriorates. Ni improves the toughness by increasing the stacking fault energy.

Therefore, from the viewpoint of improving the low-temperature toughness of the weld metal and reducing the amount of fumes generated while suppressing the cost of the welding rod, the mass ratio (Ni/Mn) of the Mn content and the Ni content in the core wire is preferably set to 0.10 or more.

The lower limit of the mass ratio (Ni/Mn) of the Mn content and the Ni content in the core wire is more preferably 0.20, 0.30, 0.50, 0.70, 1.00, 1.10, or 1.20.

The upper limit of the mass ratio (Ni/Mn) of the Mn content and the Ni content in the core wire is preferably 10.00, 8.00, or 5.00.

(Fraction of fcc Determined by Magnetic Induction Method)

In order to enhance the low-temperature toughness in the weld metal, it is preferable to increase the proportion of austenite in the structure of the core wire. Therefore, the fraction of fcc in the core wire is set to 70% or more. The fraction of fcc is preferably 80% or more or 90% or more, and may be 100%. The remainder of the structure is bcc.

The fraction of fcc in the structure of the core wire can be determined by the following method.

A sample is collected from the core wire, the fraction (%) of bcc on the sample surface is measured by a magnetic induction method using FERITSCOPE (registered trademark) FMP30 (manufactured by FISCHER INSTRUMENTS K.K.) and using a probe (FGAB 1.3-Fe) manufactured by FISCHER INSTRUMENTS K.K. as a probe of the measuring instrument, and the arithmetic average value of the measured fractions of bcc is determined. The fraction (%) of fcc in the structure of the core wire is determined using the obtained average value of the fractions of bcc by the following formula.

$$\text{Fraction of fcc} = 100 - \text{Fraction of bcc}$$

(Chemical Component of Flux)

Hereinafter, a preferred chemical component of the flux according to the disclosure will be described.

In the description of the chemical component of the flux, "%" means "by mass% with respect to the total mass of the flux" unless otherwise specified.

The chemical component of the flux according to the disclosure preferably includes

a total of $TiO_2$-equivalent values of a Ti oxide: from 0% to 25.00%,
a total of $SiO_2$-equivalent values of a Si oxide: from 0% to 25.00%,
a total of $ZrO_2$-equivalent values of a Zr oxide: from 0% to 5.00%,
a total of $Al_2O_3$-equivalent values of an Al oxide: from 0% to 5.00%,
a total of MgO-equivalent values of a Mg oxide: from 0% to 5.00%,
a total of CaO-equivalent values of a Ca oxide: from 0% to 25.00%,
a total of $Na_2O$-equivalent values of a Na oxide: from 0% to 5.00%,
a total of $K_2O$-equivalent values of a K oxide: from 0% to 5.00%,
$CaF_2$: from 0% to 30.00%,

CaCO$_3$: from 0% to 60.00%,
BaCO$_3$: from 0% to 15.00%,
MgCO$_3$: from 0% to 15.00%, and
Li$_2$CO$_3$: from 0% to 15.00%.

(Total of TiO$_2$-Equivalent Values of Ti Oxide: from 0% to 25.00% by Mass%)

The Ti oxide is a slag component and has an action of uniformly encapsulating the entire bead with the slag. The Ti oxide has an effect of stabilizing the duration of the arc and reducing the amount of spatters generated, and welding workability (particularly, vertical weldability) is improved. Therefore, the Ti oxide may be contained.

However, a sum of the total of TiO$_2$-equivalent values of the Ti oxide and the total of SiO$_2$-equivalent values of the Si oxide is preferably 5.00% or more, that is, only one of the Ti oxide or the Si oxide may be contained. Therefore, the lower limit of TiO$_2$-equivalent values of the Ti oxide may be 0%.

When the total of TiO$_2$-equivalent values of the Ti oxide is 25.00% or less, the amount of oxygen in the weld metal can be suppressed, and the low-temperature toughness can be secured. When the total of TiO$_2$-equivalent values of the Ti oxide is 25.00% or less, an increase in viscosity of the slag can be suppressed, and thus, it is possible to suppress the slag from becoming too thick, and to suppress a shape in which the toe of the bead is expanded. When the total of TiO$_2$-equivalent values of the Ti oxide is 25.00% or less, the formation of pits can be suppressed. The occurrence of slag entrainment can be suppressed.

Therefore, the total of TiO$_2$-equivalent values of the Ti oxide in the flux is preferably set to from 0% to 25.00%.

The lower limit of the total of TiO$_2$-equivalent values of the Ti oxide is more preferably 1.00%, 2.00%, 3.00%, or 5.00%.

The upper limit of the total of TiO$_2$-equivalent values of the Ti oxide is more preferably 23.00%, 20.00%, 18.00%, 15.00%, 13.00%, or 10.00%.

The Ti oxide may mainly exist as rutile, titanium oxide, titanium slag, ilmenite, sodium titanate, potassium titanate, or the like in the flux. Therefore, mainly by controlling the content of the Ti oxide in the flux, the content of the Ti oxide can be adjusted to the above range.

The total of TiO$_2$-equivalent values of the Ti oxide is the mass percentage of TiO$_2$ with respect to the total mass of the welding rod in a case in which all the Ti oxides (for example, TiO, TiO$_2$, Ti$_2$O$_3$, Ti$_3$O$_5$, and the like are used, and the Ti oxides are added as rutile, titanium oxide, titanium slag, ilmenite, sodium titanate, potassium titanate, or the like) contained in the flux are converted into TiO$_2$.

The total of TiO$_2$-equivalent values of the Ti oxide is determined by analyzing the mass of Ti existing as an oxide in the flux using a fluorescent X-ray analyzer and an X-ray diffraction (XRD) apparatus. The amount of Ti existing as an oxide in the flux and the amount of Ti contained as a metal component can be determined separately by analyzing components contained in the flux by fluorescent X-ray analysis and then analyzing the molecular structure of the components contained by X-ray diffraction (XRD).

Specifically, first, a flux is collected from the welding rod and is analyzed by the above method. For example, in a case in which TiO$_2$, Ti$_2$O$_3$, and Ti$_3$O$_5$ are detected by analysis, the mass percentages of the Ti oxides are represented as [TiO$_2$], [Ti$_2$O$_3$], and [Ti$_3$O$_5$], respectively, and the total of TiO$_2$-equivalent values of the Ti oxide is represented as [converted TiO$_2$], which is calculated by the following Formula 1.

$$[\text{Converted TiO}_2] = (0.60 \times [\text{TiO}_2] + 0.67 \times [\text{Ti}_2\text{O}_3] + 0.64 \times [\text{Ti}_3\text{O}_5]) \times 1.67 \ldots \text{Formula 1}$$

The coefficients (0.60, 0.67, and 0.64) in Formula 1 are coefficients for calculating the amount of Ti contained in each oxide, and the multiplier (1.67) at the end is a multiplier for calculating a TiO$_2$-equivalent value from the total amount of Ti existing as an oxide in the flux.

A method of determining the coefficient will be described. When an oxide of M$_x$O$_y$ (example; TiO$_2$, Ti$_2$O$_3$, or Ti$_3$O$_5$) is detected, a coefficient relating to M$_x$O$_y$ is calculated by the following Formula 2.

[Atomic weight of element M] $\times$ x/([Atomic weight of element M] $\times$ x + [Atomic weight of oxygen] $\times$ y) ... Formula 2

Formula 2

0.60, 0.67, and 0.64 in Formula 1 correspond to the coefficients determined by the above Formula 2.

A method of determining the multiplier for calculating an equivalent value will be described. The multiplier for conversion into M$_a$O$_b$ (example; TiO$_2$) is calculated by the following Formula 3.

([Atomic weight of element M] $\times$ a + [Atomic weight of oxygen] $\times$ b)/([Atomic weight of element M] $\times$ a) ... Formula 3

Formula 3

1.67 in Formula 1 corresponds to the multiplier determined by the above Formula 3.

The oxide may be considered to be a compound bonded to two kinds of metal elements. In this case, as a method of determining a coefficient, in a case in which $M_xO_yM^2_z$ (example; $TiO_3 \cdot Fe$, that is, an oxide of M = Ti, $M^2$ = Fe, x = 1, y = 3, and z = 1) is detected, the coefficient is calculated by the following Formula 4.

[Atomic weight of element M] $\times$ x/([Atomic weight of element M] $\times$ x + [Atomic weight of oxygen] $\times$ y + [Atomic weight of element $M^2$] $\times$ z) ... Formula 4

Formula 4

The total of $SiO_2$-equivalent values of the Si oxide, the total of $ZrO_2$-equivalent values of the Zr oxide, the total of $Al_2O_3$-equivalent values of the Al oxide, the total of MgO-equivalent values of the Mg oxide, the total of CaO-equivalent values of the Ca oxide, the total of $Na_2O$-equivalent values of the Na oxide, the total of $K_2O$-equivalent values of the K oxide, the total of $MnO_2$-equivalent values of the Mn oxide, and the total of FeO-equivalent values of the Fe oxide can also be obtained by calculation similar to the total of the $TiO_2$-equivalent values of the Ti oxide. That is, the flux collected by a fluorescent X-ray analyzer and an X-ray diffraction (XRD) apparatus is analyzed, coefficients and multipliers are calculated according to the detected various oxides in accordance with the above Formulae 2, 3, and 4, and calculation is performed in the similar manner as in the above Formula 1.

Representative oxides detected by analysis are listed below.

Si oxide; SiO, $SiO_2$, $Si_2O_3$, and $Si_2O_4$
Zr oxide; $ZrO_2$
Al oxide; AlO, $Al_2O_3$, and $Al_3O_5$
Mg oxide; MgO, $MgO_2$, and $Mg_2O$
Ca oxide; CaO and $CaO_2$
Na oxide; $Na_2O$ and $Na_2O_2$
K oxide; $K_2O$ and $KO_2$
Mn oxide; MnO, $Mn_2O$, and $MnO_2$
Fe oxide; FeO, $Fe_2O_4$, and $FeO_3$

(Total of $SiO_2$-Equivalent Values of Si Oxide: from 0% to 25.00%)

Since the Si oxide is a slag component and has an action of increasing the viscosity of molten slag and improving slag removability, the Si oxide may be contained from such a viewpoint.

However, a sum of the total of $TiO_2$-equivalent values of the Ti oxide and the total of $SiO_2$-equivalent values of the Si oxide is preferably 5.00% or more, that is, only one of the Ti oxide or the Si oxide may be contained. Therefore, the lower limit of $SiO_2$-equivalent values of the Si oxide may be 0%.

When the total of $SiO_2$-equivalent values of the Si oxide is 0.10% or more, the slag encapsulation state is further improved, the slag removability is enhanced, and the bead shape and the bead appearance can be further improved. Welding workability (particularly, vertical weldability) can be secured.

When the total of $SiO_2$-equivalent values of the Si oxide is 25.00% or less, the amount of oxygen in the weld metal can be suppressed, and the low-temperature toughness can be secured. When the total of $SiO_2$-equivalent values of the Si oxide is 25.00% or less, the amount of spatters generated can be suppressed. When the total of $SiO_2$-equivalent values of the Si oxide is 25.00% or less, the formation of pits, gas grooves, and the like can be suppressed. The occurrence of slag entrainment can be suppressed.

Therefore, the total of $SiO_2$-equivalent values of the Si oxide in the flux is preferably set to from 0% to 25.00%.

The lower limit of the total of $SiO_2$-equivalent values of the Si oxide is more preferably 0.05%, 0.10%, 0.15%, 0.20%, or 0.25%.

The upper limit of the total of $SiO_2$-equivalent values of the Si oxide is more preferably 23.00%, 20.00%, 18.00%, 15.00%, 13.00%, or 10.00%.

The Si oxide may mainly exist as silica sand, zircon sand, feldspar, sodium silicate, potassium silicate, or the like in the flux.

(Sum of Total of $TiO_2$-Equivalent Values of Ti Oxide and Total of $SiO_2$-Equivalent Values of the Si Oxide Is 5.0% or More)

The Ti oxide and the Si oxide are slag components, and from the viewpoint of making the encapsulated state of the slag favorable and the viewpoint of welding workability, at least one of the Ti oxide or the Si oxide is preferably contained. In particular, the sum of the total of $TiO_2$-equivalent values of the Ti oxide and the total of $SiO_2$-equivalent values of the Si oxide in the flux is preferably set to 5.0% or more.

The lower limit of the sum of the total of $TiO_2$-equivalent values of the Ti oxide and the total of $SiO_2$-equivalent values of the Si oxide in the flux is more preferably 7.0% or 10.0%.

The upper limit of the sum of the total of $TiO_2$-equivalent values of the Ti oxide and the total of $SiO_2$-equivalent values of the Si oxide in the flux is preferably 50.0%, 45.0%, 40.0%, 35.0%, or 30.0%.

(Total of $ZrO_2$-Equivalent Values of of Zr Oxide: from 0% to 5.00%)

The Zr oxide increases the amount of oxygen in the weld metal and deteriorates the low-temperature toughness. Therefore, from the viewpoint of the low-temperature toughness, it is preferable not to contain a Zr oxide, and the lower limit of the total of $ZrO_2$-equivalent values of the Zr oxide is set to 0%.

However, since the Zr oxide is a slag component and has an action of enhancing slag encapsulation in horizontal fillet welding to smooth the bead shape, the Zr oxide may be contained from such a viewpoint.

When the total of $ZrO_2$-equivalent values of the Zr oxide is 5.00% or less, it is possible to suppress the bead shape from being convex. The occurrence of slag entrainment can be suppressed.

Therefore, the total of $ZrO_2$-equivalent values of the Zr oxide in the flux is preferably set to from 0% to 5.00%.

The upper limit of the total of $ZrO_2$-equivalent values of the Zr oxide is more preferably 4.50%, 4.00%, 3.50%, or 3.00%.

The Zr oxide may mainly exist as zircon sand, zirconium oxide, or the like in the flux, and may be contained in a trace amount in the Ti oxide.

(Total of $Al_2O_3$-Equivalent Values of Al Oxide: from 0% to 5.00%)

Since the Al oxide serves as an oxygen source, when the Al oxide is added, the amount of oxygen in the weld metal, which causes toughness deterioration. Therefore, from the viewpoint of the low-temperature toughness, it is preferable not to contain an Al oxide, and the lower limit of the total of $Al_2O_3$-equivalent values of the Al oxide is set to 0%.

However, in a case in which the molten slag is formed, the Al oxide has an action of preventing undercut on the upper leg side of the fillet bead by improving slag encapsulation, and thus may be contained from such a viewpoint.

When the total of $Al_2O_3$-equivalent values of the Al oxide is 5.00% or less, the bead shape in which the toe of the bead on the lower leg side of the fillet bead is expanded can be suppressed. The occurrence of slag entrainment can be suppressed.

Therefore, the total of $Al_2O_3$-equivalent values of the Al oxide in the flux is preferably set to from 0% to 5.00%.

The upper limit of the total of $Al_2O_3$-equivalent values of the Al oxide is more preferably 4.50%, 4.00%, 3.50%, or 3.00%.

The Al oxide may mainly exist as a component such as alumina or feldspar in the flux in many cases.

(Total of MgO-Equivalent Values of Mg Oxide: from 0% to 5.00%)

The Mg oxide is decomposed during welding, and decomposed Mg acts as a deoxidizing agent to reduce the amount of oxygen in the weld metal. Thereby, the low-temperature toughness of the weld metal is improved, and thus such an oxide may be contained. When the total of MgO-equivalent values of the Mg oxide is 0.10% or more, an action of reducing the amount of oxygen in the weld metal is increased, and the low-temperature toughness is further improved.

When the total of MgO-equivalent values of the Mg oxide is 5.00% or less, the lowering of the solidification temperature of the welding slag can be suppressed, and welding workability (particularly, vertical weldability) can be improved.

Therefore, the total of MgO-equivalent values of the Mg oxide in the flux is preferably set to from 0% to 5.00%.

The lower limit of the total of MgO-equivalent values of the Mg oxide is more preferably 0.10%, 0.20%, 0.30%, or 0.40%.

The upper limit of the total of MgO-equivalent values of the Mg oxide is more preferably 4.50%, 4.00%, 3.50%, or 3.00%.

(Total of CaO-Equivalent Values of Ca Oxide: from 0% to 25.00%)

Since the Ca oxide adjusts a slag shape, facilitates slag removal after welding, and stabilizes an arc, the Ca oxide may be contained.

When the total of CaO-equivalent values of the Ca oxide is 25.00% or less, an increase in the amount of oxygen in the weld metal due to entry of oxygen contained in the Ca oxide into a molten pool can be suppressed, and a decrease in toughness of the weld metal can be suppressed.

Therefore, the total of $CaO_2$-equivalent values of the Ca oxide in the flux is preferably set to from 0% to 25.00%.

The lower limit of the total of CaOz-equivalent values of the Ca oxide is more preferably 0.10%, 0.20%, 0.30%, or 0.40%.

The upper limit of the total of CaOz-equivalent values of the Ca oxide is more preferably 23.00%, 20.00%, 18.00%, 15.00%, 13.00%, or 10.00%.

(Total of $Na_2O$-Equivalent Values of Na Oxide: from 0% to 5.00%)

The Na oxide is decomposed during welding, and decomposed Na acts as a deoxidizing agent to reduce the amount of oxygen in the weld metal. Thereby, the low-temperature toughness of the weld metal is improved, and thus such an oxide may be contained. When the total of $Na_2O$-equivalent values of the Na oxide is 0.10% or more, an action of reducing the amount of oxygen in the weld metal is increased, and the low-temperature toughness is further improved.

When the total of $Na_2O$-equivalent values of the Na oxide is 5.00% or less, the lowering of the solidification temperature of the welding slag can be suppressed, and welding workability (particularly, vertical weldability) can be improved.

Therefore, the total of $Na_2O$-equivalent values of the Na oxide in the flux is preferably set to from 0% to 5.00%.

The lower limit of the total of $Na_2O$-equivalent values of the Na oxide is more preferably 0.10%, 0.20%, 0.30%, or 0.40%.

The upper limit of the total of $Na_2O$-equivalent values of the Na oxide is more preferably 4.50%, 4.00%, 3.50%, or 3.00%.

(Total of $K_2O$-Equivalent Values of K Oxide: from 0% to 5.00%)

The K oxide is decomposed during welding, and decomposed K acts as a deoxidizing agent to reduce the amount of oxygen in the weld metal. Thereby, the low-temperature toughness of the weld metal is improved, and thus such an oxide may be contained. When the total of $K_2O$-equivalent values of the K oxide is 0.10% or more, an action of reducing the amount of oxygen in the weld metal is increased, and the low-temperature toughness is further improved.

When the total of $K_2O$-equivalent values of the K oxide is 5.00% or less, the lowering of the solidification temperature of the welding slag can be suppressed, and welding workability (particularly, vertical weldability) can be improved.

Therefore, the total of $K_2O$-equivalent values of the K oxide in the flux is preferably set to from 0% to 5.00%.

The lower limit of the total of $K_2O$-equivalent values of the K oxide is more preferably 0.10%, 0.20%, 0.30%, or 0.40%.

The upper limit of the total of $K_2O$-equivalent values of the K oxide is more preferably 4.50%, 4.00%, 3.50%, or 3.00%.

(Other Oxides)

The flux according to the disclosure may contain, for example, oxides such as a Fe oxide and a Mn oxide as other oxides.

The content of the Fe oxide means the total of FeO-equivalent values of the Fe oxide, and the content of the Mn oxide means the total of MnO-equivalent values of the Mn oxide.

($CaF_2$: from 0% to 30.00%)

Since $CaF_2$ has an effect of reducing the amount of oxygen in the weld metal, $CaF_2$ may be contained. When the content of $CaF_2$ is 0.10% or more, an action of reducing the amount of oxygen in the weld metal is increased, and the low-temperature toughness is further improved.

When the content of $CaF_2$ is 30.00% or less, the generation of fumes can be reduced, and the occurrence of welding defects can be suppressed.

Therefore, the $CaF_2$ content in the flux is preferably set to 0% to 30.00%.

The lower limit of the $CaF_2$ content is more preferably 0.10%, 0.20%, 0.30%, or 0.40%.

The upper limit of the $CaF_2$ content is more preferably 28.00%, 25.00%, 23.00%, 20.00%, 18.00%, or 15.00%.

(Other Fluorides)

The flux according to the disclosure may contain, for example, fluorides such as $K_2SiF_6$, $K_2ZrF_6$, NaF, $Na_3AlF_6$, and $MgF_2$ as other fluorides.

The contents of $CaF_2$ and the other fluorides are measured by fluorescent X-ray analysis and X-ray diffraction (XRD) similarly to the content of the Ti oxide described above.

($CaCO_3$: from 0% to 60.00%)
($BaCO_3$: from 0% to 15.00%)
($MgCO_3$: from 0% to 15.00%)
($Li_2CO_3$: from 0% to 15.00%)

The metal carbonate is ionized by an arc to generate $CO_2$ gas. The $CO_2$ gas lowers the hydrogen partial pressure in a welding atmosphere and reduces the diffusible hydrogen amount in the weld metal. Therefore, the flux according to the disclosure may contain one or two or more selected from the group consisting of $CaCO_3$, $BaCO_3$, $MgCO_3$, and $Li_2CO_3$, and a metal carbonate.

By reducing the content of the metal carbonate, the amount of spatters generated can be suppressed.

Therefore, the $CaCO_3$ content in the flux is preferably set to 0% to 60.00%.

The lower limit of the $CaCO_3$ content is more preferably 0.10%, 0.20%, 0.30%, or 0.40%.

The upper limit of the $CaCO_3$ content is more preferably 55.00%, 50.00%, 45.00%, 40.00%, 35.00%, or 30.00%.

The $BaCO_3$ content in the flux is preferably set to 0% to 15.00%.

The lower limit of the $BaCO_3$ content is more preferably 0.10%, 0.20%, 0.30%, or 0.40%.

The upper limit of the $BaCO_3$ content is more preferably 14.00%, 12.00%, 10.00%, 8.00%, 7.00%, or 5.00%.

The $MgCO_3$ content in the flux is preferably set to 0% to 15.00%.

The lower limit of the $MgCO_3$ content is more preferably 0.10%, 0.20%, 0.30%, or 0.40%.

The upper limit of the $MgCO_3$ content is more preferably 14.00%, 12.00%, 10.00%, 8.00%, 7.00%, or 5.00%.

The $Li_2CO_3$ content in the flux is preferably set to 0% to 15.00%.

The lower limit of the $Li_2CO_3$ content is more preferably 0.10%, 0.20%, 0.30%, or 0.40%.

The upper limit of the $Li_2CO_3$ content is more preferably 14.00%, 12.00%, 10.00%, 8.00%, 7.00%, or 5.00%.

(Total Content of $CaCO_3$, $BaCO_3$, $MgCO_3$, and $Li_2CO_3$ Is 5.00% or More)

$CaCO_3$, $BaCO_3$, $MgCO_3$, and $Li_2CO_3$ are generation sources of shielding gas, and from the viewpoint of securing favorable mechanical properties, it is preferable to contain any one or more of $CaCO_3$, $BaCO_3$, $MgCO_3$, and $Li_2CO_3$. In particular, the total content of $CaCO_3$, $BaCO_3$, $MgCO_3$, and $Li_2CO_3$ in the flux is preferably set to 5.00% or more.

The lower limit of the total content of $CaCO_3$, $BaCO_3$, $MgCO_3$, and $Li_2CO_3$ in the flux is more preferably 7.00% or 10.00%.

The upper limit of the total content of $CaCO_3$, $BaCO_3$, $MgCO_3$, and $Li_2CO_3$ in the flux is preferably 90.00%, 80.00%, 70.00%, 65.00%, or 60.00%.

(Other Metal Carbonates)

The flux according to the disclosure may contain, for example, metal carbonates such as $Na_2CO_3$, $K_2CO_3$, $FeCO_3$, $MnCO_3$, and $SrCO_3$ as other metal carbonates.

The contents of $CaCO_3$, $BaCO_3$, $MgCO_3$, $Li_2CO_3$, and the other metal carbonates are measured by fluorescent X-ray analysis and X-ray diffraction (XRD) similarly to the content of the Ti oxide described above.

(Sum X of Ti Oxide, Si Oxide, Zr Oxide, Al Oxide, Mg Oxide, Ca Oxide, Na Oxide, K Oxide, $CaF_2$, $CaCO_3$, $BaCO_3$, $MgCO_3$, and $Li_2CO_3$)

As for the chemical component of the flux according to the disclosure by mass% with respect to the total mass of the shielded metal arc welding rod, a sum X (hereinafter, simply referred to as "sum X of the specific additives") of the total of $TiO_2$-equivalent values of the Ti oxide, the total of $SiO_2$-equivalent values of the Si oxide, the total of $ZrO_2$-equivalent values of the Zr oxide, the total of $Al_2O_3$-equivalent values of the Al oxide, the total of MgO-equivalent values of the Mg oxide, the total of CaO-equivalent values of the Ca oxide, the total of $Na_2O$-equivalent values of the Na oxide, the total of

$K_2O$-equivalent values of the K oxide, the $CaF_2$ content, the $CaCO_3$ content, the $BaCO_3$ content, the $MgCO_3$ content, and the $Li_2CO_3$ content is preferably 94.98% or less.

By setting the sum X of the specific additives to 94.98% or less, slag entrainment can be prevented.

The sum X of the specific additives is more preferably 90.00% or less, 85.00% or less, 80.00% or less, 75.00% or less, or 70.00%.

(Nitride)

The flux according to the disclosure may further contain a nitride.

The nitride has a function of reducing the diffusible hydrogen amount in the weld metal to remarkably improve the low-temperature cracking resistance of the weld metal. The reason for this is not clear, but it is presumed that one of the reasons is that N in the nitride is bonded to hydrogen (H) during welding to become ammonia ($NH_3$), and this $NH_3$ is released to the outside of the weld metal.

The flux according to the disclosure may contain, for example, one or two or more selected from the group consisting of AlN, BN, $Ca_3N_2$, CeN, CrN, $C_{u3}N$, $Fe_4N$, $Fe_3N$, $Fe_2N$, $Mg_3N$, $Mo_2N$, NbN, $Si_3N_4$, TiN, VN, ZrN, $Mn_2N$, and $Mn_4N$, as a nitride.

The content of the nitride is measured by fluorescent X-ray analysis and X-ray diffraction (XRD) similarly to the content of the Ti oxide described above.

(Metal Component in Chemical Component of Flux-Cored Wire)

The metal component in a preferred chemical component of the flux according to the disclosure will be described.

In the description of the metal component of the flux, "%" means "by mass% with respect to the total mass of the flux" unless otherwise specified.

The "metal component in the chemical component" of the flux means a component other than an oxide, a fluoride, a nitride, and a metal carbonate among components contained in the flux.

In the flux according to the disclosure, a metal component in the chemical component of the flux preferably consists of, by mass% with respect to the total mass of the shielded metal arc welding rod,

C: from 0.020% to 5.000%,
Si: from 0% to 5.00%,
Mn: from 0% to 30.00%,
P: from 0% to 0.050%,
S: from 0% to 0.050%,
Cu: from 0% to 20.0%,
Ni: from 0% to 20.0%,
Cr: from 0% to 20.0%,
Mo: from 0% to 10.0%,
Nb: from 0% to 5.00%,
V: from 0% to 5.0%,
Co: from 0% to 1.00%,
Pb: from 0% to 1.00%,
Sn: from 0% to 1.00%,
W: from 0% to 20.0%,
Mg: from 0% to 5.00%,
Al: from 0% to 5.0%,
Ca: from 0% to 5.00%,
Ti: from 0% to 5.000%,
B: from 0% to 5.0000%,
REM: from 0% to 5.00%,
Bi: from 0% to 5.000%,
N: from 0% to 5.0000%, and
balance: Fe and impurities.

That is, in the flux according to the disclosure, the component is a content of a component other than an oxide, a fluoride, a nitride, and a metal carbonate.

The total (Mn + Ni) of the Mn content and the Ni content in the flux is preferably 1.00% or more.

(C: from 0.020% to 5.000%)

C is an element that improves the strength of the weld metal, and is an element for securing the strength of the weld metal.

By reducing the C content of the flux, it is possible to suppress the influence of deterioration of toughness due to an increase in strength of the weld metal, and to secure the low-temperature toughness of the weld metal.

Therefore, the C content of the flux is preferably set to 0.020% to 5.000%.

The lower limit of the C content of the flux is more preferably 0.050%, 0.100%, or 0.200%.

The upper limit of the C content of the flux is more preferably 4.500%, 4.000%, 3.500%, or 3.000.

(Si: from 0% to 5.00%)

Since Si improves the cleanliness of the weld metal and suppresses the occurrence of welding defects such as blow holes, Si may be contained in the flux.

By reducing the Si content of the flux, in welding of Ni steel and Ni-based alloy steel, micro-segregation in the weld metal can be suppressed, and embrittlement in the segregation part can be suppressed.

Therefore, the Si content of the flux is preferably set to 0% to 5.00%.

The lower limit of the Si content of the flux is more preferably 0.10%, 0.20%, 0.25%, 0.30%, or 0.35%.

The upper limit of the Si content of the flux is more preferably 4.50%, 4.00%, 3.50%, or 3.00%.

(Mn: from 0% to 30.00%)

Mn is an austenite stabilizing element, can cause austenitization of the weld metal to proceed, and can secure the low-temperature toughness. It is not necessary to excessively increase the content of the Mn to be added to the core wire in order to secure the low-temperature toughness of the weld metal.

Mn is an element that functions as a deoxidizing agent to improve the cleanliness of the weld metal. Mn is an element that detoxifies S in the weld metal by forming MnS and improves the low-temperature toughness of the weld metal. Mn also has an effect of preventing hot cracking. Therefore, Mn may be contained in the flux.

The total (Mn + Ni) of the Mn content and the Ni content is preferably 1.00% or more, that is, the flux may contain only one of Mn or Ni. Therefore, the lower limit of the Mn content may be 0%.

By reducing the Mn content of the flux, in welding of Ni steel and Ni-based alloy steel, micro-segregation in the weld metal can be suppressed, and embrittlement in the segregation part can be suppressed.

Therefore, the Mn content of the flux is preferably set to 0% to 30.00%.

The lower limit of the Mn content of the flux is more preferably 0.10%, 0.50%, 1.00%, 2.00%, 5.00%, 7.00%, or 9.00%.

The upper limit of the Mn content of the flux is more preferably 28.00%, 25.00%, 22.00%, or 20.00%.

(P: from 0% to 0.050%)

Since P is an impurity element and reduces the toughness of the weld metal, it is preferable to reduce the P content of the flux as much as possible. Therefore, the lower limit of the P content of the flux is set to 0%. However, from the viewpoint of reducing the costs for removing P, the P content may be 0.003% or more.

When the P content of the flux is 0.050% or less, an adverse effect of P on the toughness can be suppressed.

Therefore, the P content of the flux is preferably set to 0% to 0.050%.

In order to effectively suppress the decrease in toughness of the weld metal, the P content of the flux is more preferably 0.040% or less, 0.030% or less, 0.020% or less, 0.015% or less, or 0.010% or less.

(S: from 0% to 0.050%)

Since S is an impurity element and reduces the toughness of the weld metal, it is preferable to reduce the S content of the flux as much as possible. Therefore, the lower limit of the S content of the flux is set to 0%. However, from the viewpoint of reducing the costs for removing S, the S content of the flux may be 0.003% or more.

When the S content of the flux is 0.050% or less, an adverse effect of S on the toughness can be suppressed.

Therefore, the S content of the flux is preferably set to 0% to 0.050%.

In order to effectively suppress the decrease in toughness of the weld metal, the S content of the flux is more preferably 0.040% or less, 0.030% or less, 0.020% or less, 0.015% or less, or 0.010% or less.

(Cu: from 0% to 20.0%)

Cu is a precipitation strengthening element and may be contained in the flux in order to improve the strength of the weld metal. Cu is an austenite stabilizing element and may be contained in the flux in order to improve the low-temperature toughness of the weld metal.

When the Cu content of the flux is excessive, the above effect is saturated.

Therefore, the Cu content of the flux is preferably set to 0% to 20.0%.

The lower limit of the Cu content of the flux is more preferably 0.5%, 0.7%, or 1.0%.

The upper limit of the Cu content of the flux is more preferably 19.0%, 18.0%, 17.0%, or 15.0%.

(Ni: from 0 to 20.0)

Ni is an austenite stabilizing element, can cause austenitization of the weld metal to proceed, and can secure the low-temperature toughness. It is not necessary to excessively increase the content of the Ni to be added to the core wire in order to secure the low-temperature toughness of the weld metal. Therefore, Ni may be contained in the flux.

The total (Mn + Ni) of the Mn content and the Ni content is preferably 1.00% or more, that is, the flux may contain only one of Mn or Ni. Therefore, the lower limit of the Ni content may be 0%.

By reducing the Ni content of the flux, the cost of the flux can be reduced.

Therefore, the Ni content of the flux is preferably set to 0% to 20.0%.

The lower limit of the Ni content of the flux is more preferably 0.1%, 0.5%, 1.0%, 2.0%, 3.0%, 5.0%, 7.0%, 10.0%, or 12.0%.

The upper limit of the Ni content of the flux is more preferably 19.0%, 18.0%, 17.0%, or 15.0%.

(Cr: from 0% to 20.0%)

Cr is an austenite stabilizing element, can cause austenitization of the weld metal to proceed, and can secure the low-temperature toughness. It is not necessary to excessively increase the content of the Ni to be added to the core wire in order to secure the low-temperature toughness of the weld metal. Therefore, Cr may be contained in the flux.

By reducing the Cr content of the flux, the amount of a low-melting-point compound in the molten metal can be reduced, and the solid-liquid coexisting temperature range of the molten metal is narrowed, so that the occurrence of hot cracking can be suppressed.

Therefore, the Cr content of the flux is preferably set to 0% to 20.0%.

The lower limit of the Cr content of the flux is more preferably 0.1%, 0.5%, 1.0%, 2.0%, 2.5%, 3.0%, or 3.5%.

The upper limit of the Cr content of the flux is more preferably 19.0%, 18.0%, 17.0%, or 15.0%.

(Mo: from 0% to 10.0%)

Mo is a solid-solution strengthening element and a precipitation strengthening element and may be contained in the flux in order to improve the strength of the weld metal.

By reducing the Mo content of the flux, an excessive increase in strength of the weld metal can be suppressed, and the low-temperature toughness can be secured.

Therefore, the Mo content of the flux is preferably set to 0% to 10.0%.

The lower limit of the Mo content of the flux is more preferably 0.1%, 0.5%, 1.0%, 2.0%, 2.5%, 3.0%, or 3.5%.

The upper limit of the Mo content of the flux is more preferably 9.8%, 9.5%, 9.0%, 8.5%, or 8.0%.

(Nb: from 0% to 5.00%)

Nb is an element that forms a carbide in the weld metal and increases the sheath of the weld metal, and thus may be contained in the flux.

By reducing the Nb content of the flux, the occurrence of hot cracking of the weld metal can be suppressed.

Therefore, the Nb content of the flux is preferably set to 0% to 5.00%.

The lower limit of the Nb content of the flux is more preferably 0.10%, 0.50%, 1.00%, or 1.50%.

The upper limit of the Nb content of the flux is more preferably 4.50%, 4.00%, or 3.50%.

(V: from 0% to 5.0%)

V is an element that forms a carbonitride in the weld metal and increases the sheath of the weld metal, and thus may be contained in the flux.

By reducing the V content of the flux, the occurrence of hot cracking of the weld metal can be suppressed.

Therefore, the V content of the flux is preferably set to 0% to 5.0%.

The lower limit of the V content of the flux is more preferably 0.1%, 0.5%, 1.0%, or 1.5%.

The upper limit of the V content of the flux is more preferably 4.5%, 4.0%, or 3.5%.

(Co: from 0% to 1.00%)

Since Co is an element that increases the strength of the weld metal by solid solution strengthening, Co may be contained in the flux.

By reducing the Co content of the flux, a decrease in ductility of the weld metal can be suppressed, and the toughness can be secured.

Therefore, the Co content of the flux is preferably set to 0% to 1.00%.

The lower limit of the Co content of the flux is more preferably 0.01%, 0.05%, 0.10%, 0.15%, or 0.20%.

The upper limit of the Co content of the flux is more preferably 0.90%, 0.80%, 0.70%, 0.60%, or 0.30%.

(Pb: from 0% to 1.00%)

Since Pb has an effect of improving the machinability of the weld metal, Pb may be contained in the flux.

By reducing the Pb content of the flux, the arc state can be favorably maintained, and the occurrence of spatters can be suppressed.

Therefore, the Pb content of the flux is preferably set to 0% to 1.00%.

The lower limit of the Pb content of the flux is more preferably 0.01%, 0.05%, 0.10%, 0.15%, or 0.20%.

The upper limit of the Pb content of the flux is more preferably 0.90%, 0.80%, 0.70%, 0.60%, or 0.30%.

(Sn: from 0% to 1.00%)

Since Sn is an element that improves the corrosion resistance of the weld metal, Sn may be contained in the flux.

By reducing the Sn content of the flux, the occurrence of cracking in the weld metal can be suppressed.

Therefore, the Sn content of the flux is preferably set to 0% to 1.00%.

The lower limit of the Sn content of the flux is more preferably 0.01%, 0.05%, 0.10%, 0.15%, or 0.20%.

The upper limit of the Sn content of the flux is more preferably 0.90%, 0.80%, 0.70%, 0.60%, or 0.30%.

(W: from 0% to 20.0%)

W is a solid-solution strengthening element and may be contained in the flux in order to improve the strength of the weld metal.

By reducing the W content of the flux, an excessive increase in strength of the weld metal can be suppressed, and the toughness can be secured.

Therefore, the W content of the flux is preferably set to 0% to 20.0%.

The lower limit of the W content of the flux is more preferably 0.1%, 0.5%, 1.0%, or 2.0%.

The upper limit of the W content of the flux is more preferably 19.0%, 180%, 17.0%, or 15.0%.

(Mg: from 0% to 5.00%)

Since Mg is a deoxidizing element and is effective in reducing oxygen of the weld metal and improving the toughness of the weld metal, Mg may be contained in the flux.

By reducing the Mg content of the flux, the arc can be stabilized, spatters and blow holes can be reduced, and welding workability can be secured.

Therefore, the Mg content of the flux is preferably set to 0% to 5.00%.

The lower limit of the Mg content of the flux is more preferably 0.02%, 0.05%, 0.10%, 0.20%, or 0.50%.

The upper limit of the Mg content of the flux is more preferably 4.50%, 4.00%, or 3.50%.

(Al: from 0% to 5.0%)

Since Al is a deoxidizing element and is effective in suppressing the occurrence of welding defects such as blow holes, improving the cleanliness of the weld metal, and the like, Al may be contained in the flux.

By reducing the Al content of the flux, it is possible to reduce formation of a nitride or an oxide in the weld metal by Al, and to secure the low-temperature toughness of the weld metal.

Therefore, the Al content of the flux is preferably set to 0% to 5.0%.

The lower limit of the Al content of the flux is more preferably 0.01%, 0.02%, 0.05%, 0.1%, 0.2%, or 0.5%.

The upper limit of the Al content of the flux is more preferably 4.5%, 4.0%, or 3.5%.

(Ca: from 0% to 5.00%)

Since Ca has a function of changing the structure of a sulfide in the weld metal and refining the sizes of a sulfide and an oxide in the weld metal, Ca is effective in improving the ductility and toughness of the weld metal. Therefore, Ca may be contained in the flux.

By reducing the Ca content of the flux, coarsening of a sulfide and an oxide can be suppressed, and the low-temperature toughness of the weld metal can be secured. Weldability can be secured by suppressing deterioration of a weld bead shape and stabilizing an arc.

Therefore, the Ca content of the flux is preferably set to 0% to 5.00%.

The lower limit of the Ca content of the flux is more preferably 0.01%, 0.02%, 0.03%, 0.05%, 0.10%, 0.20%, 0.30%, or 0.50%.

The upper limit of the Ca content of the flux is more preferably 4.50%, 4.00%, or 3.50%.

(Ti: from 0% to 5.000%)

Since Ti is a deoxidizing element and is effective in suppressing the occurrence of welding defects such as blow holes, improving the cleanliness, and the like, Ti may be contained in the flux.

By reducing the Ti content of the flux, the generation of a carbide in the weld metal can be suppressed, and the toughness of the weld metal can be secured.

Therefore, the Ti content of the flux is preferably set to 0% to 5.000%.

The lower limit of the Ti content of the flux is more preferably 0.020%, 0.050%, 0.100%, 0.200%, 0.300%, or 0.500%.

The upper limit of the Ti content of the flux is more preferably 4.500%, 4.000%, or 3.500%.

(B: from 0% to 5.0000%)

Since B has an effect of strengthening the crystal grain boundary of the weld metal and further increasing the tensile strength of the weld metal, B may be contained in the flux.

By reducing the B content of the flux, the amount of B in the weld metal can also be reduced, the formation of a B compound such as coarse BN or $Fe_{23}(C,B)_6$ is suppressed, and the low-temperature toughness of the weld metal can be secured.

Therefore, the B content of the flux is preferably set to 0% to 5.0000%.

The lower limit of the B content of the flux is more preferably 0.0010%, 0.0050%, 0.0100%, 0.0500%, 0.1000%, 0.2000%, or 0.5000%.

The upper limit of the B content of the flux is more preferably 4.5000%, 4.0000%, or 3.5000%.

(REM: from 0% to 5.00%)

Since REM is an element that stabilizes an arc, REM may be contained in the flux.

By reducing the REM content of the flux, the occurrence of spatters can be reduced, and welding workability can be secured.

Therefore, the REM content of the flux is preferably set to 0% to 5.00%.

The lower limit of the REM content of the flux is more preferably 0.001%, 0.005%, 0.01%, 0.05%, 0.10%, 0.20%, or 0.50%.

The upper limit of the REM content of the flux is more preferably 4.50%, 4.00%, or 3.50%.

"REM" represents total 17 elements including Sc, Y, and a lanthanoid, and the "REM content" means the total content of these 17 elements. In a case in which a lanthanoid is used as REM, REM is industrially contained in a form of a misch metal.

(Bi: from 0% to 5.000%)

Since Bi is an element that improves the peelability of slag, Bi may be contained in the flux.

By reducing the Bi content of the flux, the occurrence of solidification cracking of the weld metal can be suppressed.

Therefore, the Bi content of the flux is preferably set to 0% to 5.000%.

The lower limit of the Bi content of the flux is more preferably 0.005%, 0.010%, 0.050%, 0.100%, 0.200%, or 0.500%.

The upper limit of the Bi content of the flux is more preferably 4.500%, 4.000%, or 3.500%.

(N: from 0% to 5.0000%)

N is an austenite stabilizing element and is also an interstitial solid solution strengthening element. N is an element that also has a smaller adverse effect on toughness of the weld metal due to an increase in strength of the weld metal than that of C. Therefore, N may be contained in the flux.

By reducing the N content of the flux, the occurrence of blowing can be reduced, and the occurrence of welding defects can be suppressed.

Therefore, the N content of the flux is preferably set to 0% to 5.0000%.

The lower limit of the N content of the flux is more preferably 0.0050%, 0.0070%, 0.0100%, 0.0150%, 0.0200%, 0.0300%, 0.0500%, 0.0700%, 0.1000%, or 0.1500%.

The upper limit of the N content of the flux is more preferably 4.5000%, 4.0000%, or 3.5000%.

(Balance: Fe and Impurities)

Other remainder components in the chemical component of the flux are Fe and impurities.

The impurities mean components derived from raw materials or components to be incorporated by various factors of a manufacturing process when the flux is industrially manufactured, which are acceptable within a range not adversely affecting the flux.

(Total (Mn + Ni) of Mn Content and Ni Content Is 1.00% or More)

Each of Mn and Ni is an austenite stabilizing element and improve the low-temperature toughness of the weld metal. Since Ni is an expensive metal, in order to improve the low-temperature toughness of the weld metal while suppressing the cost of the welding rod, the total (Mn + Ni) of the Mn content and the Ni content is preferably set to 1.00% or more while each of the Mn content and the Ni content in the flux satisfies the above range.

The total (Mn + Ni) of the Mn content and the Ni content in the flux is preferably 2.00% or more, 3.00% or more, or 5.00% or more.

Mn is an element that causes an increase in the amount of fumes generated. When Mn is excessively added, the stacking fault energy decreases and the toughness deteriorates. Therefore, from the viewpoint of reducing the amount of fumes generated while suppressing the cost of the welding rod and improving the low-temperature toughness of the weld metal, the total (Mn + Ni) of the Mn content and the Ni content is preferably set to 50.00% or less while each of the Mn content and the Ni content in the flux satisfies the above range.

The total (Mn + Ni) of the Mn content and the Ni content in the flux wire is more preferably 45.00% or less, 40.00% or less, 35.00% or less, 32.00% or less, 30.00% or less, or 25.00% or less.

The shielded metal arc welding rod according to the disclosure may further include plating formed on the surface of the core wire.

The amount of hydrogen contained in the shielded metal arc welding rod according to the disclosure is not particularly limited, but is preferably 12 ppm or less with respect to the total mass of the shielded metal arc welding rod in order to reduce the diffusible hydrogen amount in the weld metal. The amount of hydrogen in the shielded metal arc welding rod may increase due to entry of moisture into the shielded metal arc welding rod during storage of the shielded metal arc welding rod. Therefore, in a case in which the period from the manufacture of the welding rod to the use of the welding rod is long, it is desirable to vacuum-package the entire shielded metal arc welding rod or store the shielded metal arc welding rod in a container capable of holding the shielded metal arc welding rod in a dried state, in order to prevent the entry of a supply source of H such as moisture.

(Welding Rod Diameter)

The diameter of the shielded metal arc welding rod according to the disclosure is not particularly limited, and is, for example, from φ3.2 mm to φ6.0 mm. The diameter of a general shielded metal arc welding rod is from φ2.6 mm to φ7.0 mm.

(Thickness)

The average thickness of the flux in the shielded metal arc welding rod according to the disclosure is not particularly limited. In view of the thickness of the flux in a general shielded metal arc welding rod, the upper limit value of the average thickness of the flux in the shielded metal arc welding rod according to the disclosure may be set to, for example, 5.0 mm, 4.0 mm, or 3.0 mm. The lower limit value of the average thickness of the flux in the shielded metal arc welding rod according to the disclosure may be set to, for example, 0.2 mm, 0.5 mm, 0.8 mm, or 1.0 mm.

For the average thickness of the flux, the outer diameter of the shielded metal arc welding rod was measured at arbitrary five positions, a value of 1/2 of a value obtained by subtracting the diameter of the core wire from the outer diameter was calculated, and the arithmetic average value thereof was taken as the average thickness.

When the flux thickness is expressed by formula, Flux thickness = ((Diameter of outer diameter of shielded metal arc welding rod) - (Diameter of core wire))/2 is established.

<Method of Manufacturing Shielded Metal Arc Welding Rod>

A method of manufacturing a shielded metal arc welding rod according to the disclosure will be described. the manufacturing method described below is an example, and the method of manufacturing a shielded metal arc welding rod according to the disclosure is not limited to the following method.

The shielded metal arc welding rod according to the disclosure can be manufactured through, for example, a step of preparing a core wire, a step of applying a flux to the core wire, and a step of firing the core wire and the flux.

In the step of preparing a core wire, for example, steel having the above-described chemical component is first melted, and then forge processing is performed if necessary. Thereafter, the steel is processed into a rod shape through rolling. This rod-shaped steel is subjected to wire drawing to obtain a core wire. A heat treatment may be appropriately performed.

A flux is applied to the core wire, and then the core wire and the flux are fired. The firing conditions are not particularly limited, but may be, for example, a firing temperature of from about 150°C to 450°C and a firing time of from about 0.1 hours to 3 hours. A fixing agent (for example, an aqueous solution of potassium silicate and sodium silicate) may be added to the flux.

<Method of Manufacturing Welded Joint>

A method of manufacturing a welded joint (welding method) according to the disclosure will be described.

The method of manufacturing a welded joint according to the disclosure includes a step of welding a steel material by using the shielded metal arc welding rod according to the disclosure described above.

A welded joint manufactured by the method of manufacturing a welded joint according to the disclosure has a high strength and high toughness. A welded structure having the welded joint manufactured by the method of manufacturing a welded joint according to the disclosure also has a high strength and high toughness in the welded joint.

In the method of manufacturing a welded joint according to the disclosure, gas shield arc welding is suitable as a welding method.

In the method of manufacturing a welded joint according to the disclosure, the type of steel material (a material to be welded) as a base material of the welded joint is not particularly limited, but for example, a Ni-based low temperature steel plate having a plate thickness of 20 mm or more and containing from 6% to 9% of Ni can be suitably used.

The method of manufacturing a welded joint according to the disclosure may include a step of welding a steel material by using the shielded metal arc welding rod according to the disclosure in any one or more of a first pass to the last pass. In a case in which the welding is performed only in a single pass, the shielded metal arc welding rod according to the disclosure is used in the single pass.

The polarity of the shielded metal arc welding rod may be either alternate current or direct current because the influence on the amount of spatters generated is negligibly small, but the polarity is preferably alternate current. In the case of direct current, the polarity of the rod is preferably positive.

The welding posture in the method of manufacturing a welded joint according to the disclosure is not particularly limited. The method of manufacturing a welded joint according to the disclosure can exhibit favorable welding workability (particularly, vertical weldability) regardless of whether the welding posture is a downward posture, a lateral posture, an upright posture, or an upward posture.

A welded joint obtained by the method of manufacturing a welded joint according to the disclosure includes a steel material as a base material and a welded part including a weld metal and a weld heat affected zone. The welded joint according to the disclosure is manufactured by using the shielded metal arc welding rod according to the disclosure, and includes a weld metal having a favorable bead shape. Therefore, a welded structure having the welded joint manufactured by the method of manufacturing a welded joint according to the disclosure also includes a weld metal having a favorable bead shape. The tensile strength of the resulting weld metal is preferably high, for example, from 590 MPa to 1200 MPa.

Examples

The feasibility and effects of the disclosure will be described in more detail with reference to the disclosure examples and comparative examples, but the following examples do not limit the disclosure, and any design change dedicated to the gist of the preceding and following description is included in the technical scope of the disclosure.

(Manufacturing Shielded Metal Arc Welding Rod)

The shielded metal arc welding rods of examples of the disclosure and comparative examples were manufactured by the method described below.

First, the flux having each chemical component shown in Tables 2-A, 2-B, 2-C, and 2-D was applied to the core wire having each chemical component shown in Tables 1-A and 1-B, and fired in a temperature range of from 300°C to 500°C for a range of from 1 hour to 3 hours to trial-produce a shielded metal arc welding rod. The final welding rod diameter of the obtained shielded metal arc welding rod was $\varphi6.0$ mm, and the average thickness of the flux was 1.0 mm. The configurations of these shielded metal arc welding rods are shown in Tables 1-A, 1-B, 2-A, 2-B, 2-C, and 2-D.

The unit of the content of the chemical component of the core wire shown in Tables 1-A, 1-B, 2-A, 2-B, 2-C, and 2-D is mass% with respect to the total mass of the core wire. The units of the content of the chemical component of the flux, the content of the oxide, the content of the fluoride, the content of the metal carbonate, and the content of the iron powder are mass% with respect to the total mass of the flux. In the table, "Mass% with respect to total mass of core wire" and "Mass% with respect to total mass of flux" were both abbreviated as "mass%", and "Metal component in chemical component of flux" was abbreviated as "Chemical component of flux".

As shown in Table 2-C, "$TiO_2$" represents a total of $TiO_2$-equivalent values of a Ti oxide, "$SiO_2$" represents a total of $SiO_2$-equivalent values of a Si oxide, "$ZrO_2$" represents a total of $ZrO_2$-equivalent values of a Zr oxide, "$Al_2O_3$" represents a total of $Al_2O_3$-equivalent values of an Al oxide, "$MgO$" represents a total of $MgO$-equivalent values of a Mg oxide, "$CaO$" represents a total of $CaO$-equivalent values of a Ca oxide, "$Na_2O$" represents a total of $Na_2O$-equivalent values of a Na oxide, and "$K_2O$" represents a total of $K_2O$-equivalent values of a K oxide.

The "sum X" shown in Table 2-D indicates a sum of the total of $TiO_2$-equivalent values of the Ti oxide, the total of $SiO_2$-equivalent values of the Si oxide, the total of $ZrO_2$-equivalent values of the Zr oxide, the total of $Al_2O_3$-equivalent values of the Al oxide, the total of $MgO$-equivalent values of the Mg oxide, the total of $CaO$-equivalent values of the Ca oxide, the total of $Na_2O$-equivalent values of the Na oxide, the total of $K_2O$-equivalent values of the K oxide, the $CaF_2$ content, the $CaCO_3$ content, the $BaCO_3$ content, the $MgCO_3$ content, and the $Li_2CO_3$ content.

[Table 1-A]

| Wire No. | Classification | C | Si | Mn | P | S | Cu | Ni | Cr | Mo | Nb | V | Co |
|---|---|---|---|---|---|---|---|---|---|---|---|---|---|
| 1 | Example of disclosure | 0.009 | 0.03 | 6.0 | 0.026 | 0.024 | 3.0 | 10.0 | 4.0 | | | | 0.10 |
| 2 | Example of disclosure | 0.004 | 0.05 | 5.0 | 0.016 | 0.027 | 2.0 | 10.0 | 5.0 | 10.0 | | 0.50 | |
| 3 | Example of disclosure | 0.013 | 0.05 | 6.0 | 0.014 | 0.011 | | 6.0 | 10.0 | 6.0 | | | |
| 4 | Example of disclosure | 0.005 | 0.04 | 9.0 | 0.005 | 0.025 | | 15.0 | 9.0 | 10.0 | 0.50 | | |
| 5 | Example of disclosure | 0.009 | 0.05 | 9.0 | 0.014 | 0.015 | | 10.0 | 10.0 | 9.0 | | | |
| 6 | Example of disclosure | 0.135 | 0.14 | 18.0 | 0.020 | 0.011 | 1.0 | 10.0 | | 10.0 | | | 0.20 |
| 7 | Example of disclosure | 0.028 | 0.08 | 20.0 | 0.008 | 0.008 | 4.0 | 20.0 | | 9.0 | | 0.01 | |
| 8 | Example of disclosure | 0.034 | 0.17 | 10.0 | 0.017 | 0.029 | 4.0 | 16.0 | 9.0 | 6.0 | | | |
| 9 | Example of disclosure | 0.179 | 0.11 | 11.0 | 0.029 | 0.014 | 5.0 | 13.0 | 10.0 | 9.0 | | 0.05 | 0.01 |

(continued)

| Wire No. | Classification | C | Si | Mn | P | S | Cu | Ni | Cr | Mo | Nb | V | Co |
|---|---|---|---|---|---|---|---|---|---|---|---|---|---|
| 10 | Example of disclosure | 0.058 | 0.13 | 16.0 | 0.006 | 0.024 | 3.0 | 19.0 | 6.0 | 5.0 | | | |
| 11 | Example of disclosure | 0.192 | 0.09 | 20.0 | 0.013 | 0.006 | | 11.0 | 3.0 | 5.0 | 0.01 | | |
| 12 | Example of disclosure | 0.148 | 0.19 | 15.0 | 0.012 | 0.010 | | 16.0 | | 6.0 | | | 0.15 |
| 13 | Example of disclosure | 0.106 | 0.14 | 14.0 | 0.023 | 0.009 | 4.0 | 15.0 | | 3.0 | | | |
| 14 | Example of disclosure | 0.020 | 0.03 | 18.0 | 0.018 | 0.025 | 1.0 | 8.0 | | 2.0 | | | |
| 15 | Example of disclosure | 0.154 | 0.03 | 30.0 | 0.008 | 0.015 | 4.0 | 20.0 | 9.0 | 5.0 | | | |
| 16 | Example of disclosure | 0.154 | 0.03 | 10.0 | 0.019 | 0.024 | | 15.0 | 1.0 | 10.0 | | | |
| 17 | Example of disclosure | 0.141 | 0.05 | 14.0 | 0.009 | 0.028 | 2.0 | 15.0 | 5.0 | 10.0 | | | |
| 18 | Example of disclosure | 0.050 | 0.05 | 10.0 | 0.008 | 0.004 | | 13.0 | 7.0 | 3.0 | 0.01 | | 0.01 |
| 19 | Example of disclosure | 0.050 | 0.05 | 10.0 | 0.008 | 0.004 | | 13.0 | 7.0 | 3.0 | 0.01 | | 0.01 |
| 20 | Example of disclosure | 0.050 | 0.15 | 10.0 | 0.008 | 0.004 | | 13.0 | 7.0 | 3.0 | | | 0.01 |
| 21 | Example of disclosure | 0.151 | 0.05 | 18.0 | 0.028 | 0.010 | | 17.0 | 5.0 | 2.0 | | | |
| 22 | Example of disclosure | 0.062 | 0.05 | 15.0 | 0.020 | 0.027 | | 18.0 | 4.0 | 10.0 | | | |
| 23 | Example of disclosure | 0.050 | 0.15 | 10.0 | 0.008 | 0.004 | | 13.0 | 7.0 | 3.0 | 0.01 | | 0.01 |
| 24 | Example of disclosure | 0.040 | 0.04 | 17.0 | 0.024 | 0.012 | 1.0 | 18.0 | 10.0 | 6.0 | | | |
| 25 | Example of disclosure | 0.152 | 0.03 | 10.0 | 0.006 | 0.009 | 1.0 | 13.0 | 9.0 | 3.0 | | | |
| 26 | Example of disclosure | 0.640 | 0.05 | 10.0 | 0.008 | 0.004 | | 13.0 | 7.0 | 3.0 | 0.01 | | 0.01 |
| 27 | Example of disclosure | 0.500 | 0.03 | 5.0 | 0.014 | 0.027 | | 4.0 | 7.0 | | | | |
| 28 | Example of disclosure | 0.400 | 0.20 | 29.0 | 0.007 | 0.008 | | 4.0 | | | 0.01 | | |
| 29 | Example of disclosure | 0.400 | 0.20 | 4.5 | 0.007 | 0.008 | | 29.0 | 7.0 | 3.0 | 0.01 | | |
| 30 | Example of disclosure | 0.200 | 0.20 | 3.5 | 0.007 | 0.008 | | 15.0 | 5.0 | 5.0 | | | |
| Al | Comparative Example | 0.028 | 0.08 | **35.0** | 0.008 | 0.008 | 4.0 | 1.0 | | 9.0 | | 0.01 | |

(continued)

| Wire No. | Classification | C | Si | Mn | P | S | Cu | Ni | Cr | Mo | Nb | V | Co |
|---|---|---|---|---|---|---|---|---|---|---|---|---|---|
| A2 | Comparative Example | 0.040 | 0.10 | **1.0** | 0.017 | 0.017 | 4.0 | 2.0 | 0.4 | 0.1 | | | |
| A3 | Comparative Example | 0.070 | 0.10 | 25.0 | 0.021 | 0.020 | 4.0 | **0** | 0.4 | 0.4 | | | |
| A4 | Comparative Example | 0.400 | 0.03 | 4.0 | 0.014 | 0.027 | | 4.0 | 4.0 | | | | |

[Table 1-B]

| Wire No. | Classification | Pb | Sn | Al | Ti | B | N | O | Mn + Ni | Mn + Ni + Cr | Ni/Mn | Fraction (%) of fcc |
|---|---|---|---|---|---|---|---|---|---|---|---|---|
| 1 | Example of disclosure | | | 0.04 | 0.06 | | 0.2500 | 0.0014 | 16.0 | 20.0 | 1.67 | 100 |
| 2 | Example of disclosure | | | 0.03 | | | 0.1540 | 0.0030 | 15.0 | 20.0 | 2.00 | 99 |
| 3 | Example of disclosure | | | | 0.01 | | 0.0236 | 0.0026 | 12.0 | 22.0 | 1.00 | 100 |
| 4 | Example of disclosure | | 0.20 | | 0.06 | | | 0.0022 | 24.0 | 33.0 | 1.67 | 99 |
| 5 | Example of disclosure | | | | 0.10 | | | 0.0026 | 19.0 | 29.0 | 1.11 | 98 |
| 6 | Example of disclosure | | | | 0.07 | | 0.1410 | 0.0015 | 28.0 | 28.0 | 0.56 | 98 |
| 7 | Example of disclosure | 0.01 | | 0.05 | 0.04 | | 0.4970 | 0.0027 | 40.0 | 40.0 | 1.00 | 99 |
| 8 | Example of disclosure | | | 0.04 | 0.01 | | | 0.0016 | 26.0 | 35.0 | 1.60 | 99 |
| 9 | Example of disclosure | | 0.01 | 0.06 | | | 0.0144 | 0.0015 | 24.0 | 34.0 | 1.18 | 100 |
| 10 | Example of disclosure | | | | | | | 0.0030 | 35.0 | 41.0 | 1.19 | 99 |
| 11 | Example of disclosure | 0.50 | | | | 0.0010 | 0.0458 | 0.0028 | 31.0 | 34.0 | 0.55 | 98 |
| 12 | Example of disclosure | | | | | 0.0010 | | 0.0017 | 31.0 | 31.0 | 1.07 | 99 |
| 13 | Example of disclosure | | | | | | 0.0059 | 0.0017 | 29.0 | 29.0 | 1.07 | 98 |
| 14 | Example of disclosure | 0.15 | | | | | | 0.0017 | 26.0 | 26.0 | 0.44 | 100 |
| 15 | Example of disclosure | | | | | | 0.1790 | 0.0016 | 50.0 | 59.0 | 0.67 | 99 |
| 16 | Example of disclosure | | 0.15 | 0.07 | | | 0.2430 | 0.0021 | 25.0 | 26.0 | 1.50 | 100 |
| 17 | Example of disclosure | | | 0.09 | | | | 0.0019 | 29.0 | 34.0 | 1.07 | 100 |

(continued)

| Wire No. | Classification | Pb | Sn | Al | Ti | B | N | O | Mn + Ni | Mn + Ni + Cr | Ni/Mn | Fraction (%) of fcc |
|---|---|---|---|---|---|---|---|---|---|---|---|---|
| 18 | Example of disclosure | | | | | 0.0010 | 0.0150 | 0.0015 | 23.0 | 30.0 | 1.30 | 100 |
| 19 | Example of disclosure | | | | | 0.0010 | 0.0150 | 0.0016 | 23.0 | 30.0 | 1.30 | 98 |
| 20 | Example of disclosure | | | | | | 0.0100 | 0.0023 | 23.0 | 30.0 | 1.30 | 99 |
| 21 | Example of disclosure | | | 0.01 | 0.01 | | | 0.0029 | 35.0 | 40.0 | 0.94 | 98 |
| 22 | Example of disclosure | | | 0.05 | 0.03 | | 0.1060 | 0.0014 | 33.0 | 37.0 | 1.20 | 100 |
| 23 | Example of disclosure | | | | | | 0.0150 | 0.0014 | 23.0 | 30.0 | 1.30 | 99 |
| 24 | Example of disclosure | | | 0.04 | | | 0.4290 | 0.0013 | 35.0 | 45.0 | 1.06 | 99 |
| 25 | Example of disclosure | | | 0.03 | 0.04 | | 0.1880 | 0.0043 | 23.0 | 32.0 | 1.30 | 98 |
| 26 | Example of disclosure | | | | | 0.0010 | 0.0150 | 0.0044 | 23.0 | 30.0 | 1.30 | 99 |
| 27 | Example of disclosure | | | | | | | 0.0013 | 9.0 | 16.0 | 0.80 | 89 |
| 28 | Example of disclosure | | | 0.03 | | | | 0.0015 | 33.0 | 33.0 | 0.14 | 98 |
| 29 | Example of disclosure | | | | | | | 0.0050 | 33.5 | 40.5 | 6.44 | 99 |
| 30 | Example of disclosure | | | | | | 0.0400 | 0.0016 | 18.5 | 23.5 | 4.29 | 73 |
| Al | Comparative Example | 0.01 | | 0.05 | 0.04 | | 0.4970 | 0.0032 | 36.0 | 36.0 | 0.03 | 98 |
| A2 | Comparative Example | | | | | | 0.0110 | 0.0005 | **3.0** | **3.4** | 2.00 | **0** |
| A3 | Comparative Example | | | | | | 0.0120 | 0.0041 | 25.0 | 25.4 | 0 | 97 |
| A4 | Comparative Example | | | | | | | 0.0015 | 8.0 | **12.0** | 1.00 | **62** |

[Table 2-A]

| Wire No. | Classification | C | Si | Mn | P | S | Cu | Ni | Cr | Mo | Nb | V | Co | Pb |
|---|---|---|---|---|---|---|---|---|---|---|---|---|---|---|
| 1 | Example of disclosure | 0.221 | 0.37 | | 0.021 | 0.020 | | | 2.9 | | | 3.1 | 0.10 | |
| 2 | Example of disclosure | 0.437 | | | 0.012 | 0.022 | 6.2 | | 1.4 | 8.4 | 1.66 | | | |
| 3 | Example of disclosure | 0.221 | 0.37 | 2.00 | 0.021 | 0.020 | | | 2.9 | | | 3.1 | 0.10 | |

(continued)

| Wire No. | Classification | C | Si | Mn | P | S | Cu | Ni | Cr | Mo | Nb | V | Co | Pb |
|---|---|---|---|---|---|---|---|---|---|---|---|---|---|---|
| 4 | Example of disclosure | 0.026 | 0.45 | 20.00 | 0.004 | 0.021 | | 22.0 | 6.9 | | | | | |
| 5 | Example of disclosure | 0.123 | 0.56 | | 0.014 | 0.013 | | 25.0 | 8.0 | | 0.76 | | | |
| 6 | Example of disclosure | 0.025 | | | 0.014 | 0.010 | | | | 11.0 | | 4.7 | 0.08 | |
| 7 | Example of disclosure | 0.247 | | | 0.006 | 0.008 | | | 25.0 | | | 1.2 | | |
| 8 | Example of disclosure | 0.068 | | | 0.014 | 0.022 | | 5.0 | 6.8 | | 3.54 | 3.4 | 0.30 | |
| 9 | Example of disclosure | 0.426 | 0.80 | 2.00 | 0.021 | 0.010 | | 8.8 | 6.6 | 7.8 | 2.89 | | 0.00 | |
| 10 | Example of disclosure | 0.341 | 0.80 | 11.32 | 0.006 | 0.021 | 0.1 | 8.7 | 4.6 | 7.7 | 4.12 | | | |
| 11 | Example of disclosure | 0.413 | 0.51 | | 0.012 | 0.007 | 7.4 | | 2.3 | 5.3 | 4.79 | | | 0.28 |
| 12 | Example of disclosure | *0.365* | 0.25 | | 0.009 | 0.010 | 2.4 | | | 8.6 | | | 0.50 | |
| 13 | Example of disclosure | 0.360 | 0.35 | | 0.020 | 0.008 | 0.4 | | | 9.9 | | | | |
| 14 | Example of disclosure | 0.180 | 0.28 | | 0.014 | 0.018 | 0.5 | | | 5.5 | | | | |
| 15 | Example of disclosure | 0.418 | 0.40 | 22.04 | 0.006 | 0.012 | | | 5.9 | 9.6 | | 4.0 | | |
| 16 | Example of disclosure | 0.249 | 0.76 | 8.07 | 0.012 | 0.015 | | | 0.6 | 8.8 | 5.00 | | | |
| 17 | Example of disclosure | 0.158 | 0.28 | | 0.008 | 0.023 | 6.3 | | 3.8 | 8.8 | | 2.8 | | |
| 18 | Example of disclosure | 1.875 | 3.21 | | 0.007 | 0.006 | | 20.0 | | | 0.01 | | | |
| 19 | Example of disclosure | 1.875 | 3.21 | | 0.007 | 0.006 | | 4.5 | | | 0.01 | | | |
| 20 | Example of disclosure | 1.875 | 3.21 | | 0.007 | 0.006 | | 4.5 | | | 0.01 | | | |
| 21 | Example of disclosure | 0.063 | 0.26 | 20.00 | 0.021 | 0.009 | | 15.0 | 3.3 | 9.3 | | 0.3 | | |
| 22 | Example of disclosure | 0.482 | | 1.00 | 0.014 | 0.019 | | 10.0 | 2.5 | 5.6 | 0.86 | | 0.50 | |
| 23 | Example of disclosure | 1.875 | 2.50 | | 0.007 | 0.006 | | 4.5 | | | | | | |
| 24 | Example of disclosure | 0.236 | 0.24 | 17.90 | 0.017 | 0.009 | 4.1 | | 6.7 | 9.1 | 1.73 | 4.3 | | 0.30 |
| 25 | Example of disclosure | 0.348 | 0.39 | 15.00 | 0.005 | 0.008 | 6.5 | 9.9 | 7.1 | 5.2 | 5.00 | 4.2 | | |

(continued)

| Wire No. | Classification | C | Si | Mn | P | S | Cu | Ni | Cr | Mo | Nb | V | Co | Pb |
|---|---|---|---|---|---|---|---|---|---|---|---|---|---|---|
| 26 | Example of disclosure | 1.900 | 3.20 | | 0.007 | 0.006 | | 5.0 | | | | | | |
| 27 | Example of disclosure | 1.800 | 3.00 | | 0.007 | 0.006 | | 4.5 | | | 0.01 | | | |
| 28 | Example of disclosure | 1.900 | 2.50 | | 0.014 | 0.018 | | 5.0 | | | | | | |
| 29 | Example of disclosure | 1.700 | 2.00 | | 0.007 | 0.006 | | 4.5 | | | | | | |
| 30 | Example of disclosure | 0.060 | | | 0.014 | 0.022 | | 5.0 | | | | | | |
| Al | Comparative Example | 0.247 | | | 0.006 | 0.008 | | | 25.0 | | | 1.2 | | |
| A2 | Comparative Example | 0.087 | 0.83 | 0.61 | 0.006 | 0.007 | | 0.2 | 0.4 | 0.5 | 0.23 | 0.3 | | |
| A3 | Comparative Example | 0.103 | 0.76 | 0.45 | 0.026 | 0.017 | | 0.1 | 0.03 | 0.5 | 0.45 | 0.3 | | |
| A4 | Comparative Example | 0.087 | 0.83 | 0.61 | 0.006 | 0.007 | | 0.2 | 0.4 | 0.5 | 0.23 | 0.3 | | |

[Table 2-B]

| Wire No. | Classification | Sn | W | Mg | Al | Ca | Ti | B | REM | Bi | N | Fe | Mn + Ni |
|---|---|---|---|---|---|---|---|---|---|---|---|---|---|
| 1 | Example of disclosure | | | 3.98 | | | | | | | 0.5400 | 3.1 | 0.00 |
| 2 | Example of disclosure | | 10.0 | | | 1.00 | | | | | 0.2149 | | 0.00 |
| 3 | Example of disclosure | | | 3.98 | | | | | | | 0.1242 | 3.1 | 2.00 |
| 4 | Example of disclosure | 0.12 | | | | 0.09 | | | | | 0.2349 | 4.3 | 42.00 |
| 5 | Example of disclosure | | | | 2.0 | | 0.060 | | | 0.045 | 0.3785 | 1.8 | 25.00 |
| 6 | Example of disclosure | | | 0.14 | | | 0.070 | | 0.50 | | 0.4737 | | 0.00 |
| 7 | Example of disclosure | | | 2.04 | | | 0.060 | | | | 0.2967 | 3.3 | 0.00 |
| 8 | Example of disclosure | | | 3.23 | 2.0 | | | | | | 0.3529 | 3.0 | 5.00 |
| 9 | Example of disclosure | | | | | 1.00 | | | | | 2.0000 | | 10.80 |
| 10 | Example of disclosure | | | | | | | | | 0.043 | 0.0479 | | 20.02 |
| 11 | Example of disclosure | 0.90 | | | 1.0 | | | | | 0.020 | 0.0250 | 4.0 | 0.00 |

(continued)

| Wire No. | Classification | Sn | W | Mg | Al | Ca | Ti | B | REM | Bi | N | Fe | Mn + Ni |
|---|---|---|---|---|---|---|---|---|---|---|---|---|---|
| 12 | Example of disclosure | | | 0.54 | | | | | | 0.035 | 0.0424 | 0.1 | 0.00 |
| 13 | Example of disclosure | | | 4.56 | | 0.10 | | | | 0.03 | 0.0239 | 3.8 | 0.00 |
| 14 | Example of disclosure | | 4.0 | | | 0.09 | | | | | 4.0000 | | 0.00 |
| 15 | Example of disclosure | | 5.0 | | 2.0 | 0.05 | 0.020 | | | | 0.0325 | 5.1 | 22.04 |
| 16 | Example of disclosure | 0.60 | 9.0 | | | 0.08 | 0.040 | | | | 0.0468 | 1.8 | 8.07 |
| 17 | Example of disclosure | | 3.0 | 2.60 | | 0.06 | 0.040 | 0.0040 | 1.00 | | 5.0000 | | 0.00 |
| 18 | Example of disclosure | | | 1.83 | | | | | | | | 4.4 | 20.00 |
| 19 | Example of disclosure | | | 1.83 | | | | | | | | 4.4 | 4.51 |
| 20 | Example of disclosure | | | 1.05 | | | | | | | | | 4.51 |
| 21 | Example of disclosure | | 8.0 | 0.71 | | 0.06 | 0.030 | | | | 0.0308 | 1.4 | 35.00 |
| 22 | Example of disclosure | | 4.0 | 4.72 | | 0.05 | 0.030 | | | | 0.0212 | 2.1 | 11.00 |
| 23 | Example of disclosure | | | 1.00 | | | | | | | | | 4.51 |
| 24 | Example of disclosure | | 7.0 | 4.27 | | | 0.090 | 0.0060 | | 0.001 | 0.0203 | 4.8 | 17.90 |
| 25 | Example of disclosure | | 7.0 | 4.63 | | | 0.100 | 0.0100 | | 0.012 | 0.0120 | | 24.90 |
| 26 | Example of disclosure | | | | | | | | | | | 4.4 | 5.00 |
| 27 | Example of disclosure | | | 1.00 | | | | | | | | 4.4 | 4.51 |
| 28 | Example of disclosure | | | | | | | | | | | 4.4 | 5.00 |
| 29 | Example of disclosure | | | 1.00 | | | | | | | | | 4.51 |
| 30 | Example of disclosure | | | | | | | | | | | | 5.00 |
| Al | Comparative Example | | | 2.04 | | | 0.060 | | | | 0.2967 | 3.3 | 0.00 |
| A2 | Comparative Example | | | | | | 0.120 | 0.0070 | | | 0.0051 | | 0.84 |
| A3 | Comparative Example | | | | | | 0.030 | 0.0070 | | | 0.0122 | 5.1 | 0.54 |

(continued)

| Wire No. | Classification | Sn | W | Mg | Al | Ca | Ti | B | REM | Bi | N | Fe | Mn + Ni |
|----------|----------------|-----|----|----|----|----|-------|--------|-----|----|--------|----|---------|
| A4 | Comparative Example | | | | | | 0.120 | 0.0070 | | | 0.0051 | | 0.84 |

[Table 2-C]

| Wire No. | Classification | Oxide | | | | | | | | Fluoride | | | | | |
|---|---|---|---|---|---|---|---|---|---|---|---|---|---|---|---|
| | | $TiO_2$ | $SiO_2$ | $ZrO_2$ | $Al_2O_3$ | MgO | CaO | $Na_2O$ | $K_2O$ | $CaF_2$ | $K_2SiF_6$ | $K_2ZrF_6$ | NaF | $Na_3AlF_6$ | $MgF_2$ |
| 1 | Example of disclosure | | 4.34 | 0.43 | | 0.46 | | | | | | | | | |
| 2 | Example of disclosure | 7.19 | 21.09 | | | | | | | | | | | | |
| 3 | Example of disclosure | | 4.34 | 0.43 | | 0.46 | | | | | | | | | |
| 4 | Example of disclosure | 7.50 | 4.58 | | | | | | | | | 28.03 | | | |
| 5 | Example of disclosure | 5.49 | | 0.15 | | | | 2.52 | 0.02 | | | | | 6.59 | 12.00 | |
| 6 | Example of disclosure | 6.64 | | | | | 19.15 | | | | | | 17.94 | | | |
| 7 | Example of disclosure | 7.15 | 24.59 | | | | | | | | | | | | |
| 8 | Example of disclosure | 7.06 | 6.69 | | | 4.00 | 15.75 | | 1.08 | | | 6.97 | | | |
| 9 | Example of disclosure | 5.07 | | | | | | | | | | | | | 22.95 | |
| 10 | Example of disclosure | | 7.38 | 0.41 | | | | | | | | | 10.08 | | |
| 11 | Example of disclosure | | 6.37 | | | | | 2.61 | | 2.00 | | | | | 8.27 | 11.63 |
| 12 | Example of disclosure | 2.00 | 4.00 | | 0.58 | | | 1.50 | 1.50 | 15.00 | | | | | |
| 13 | Example of disclosure | 4.57 | 6.61 | | | 3.57 | | 0.04 | | 23.38 | | | | | |
| 14 | Example of disclosure | 5.80 | 0.35 | 0.74 | | | | 1.50 | | 13.00 | 8.87 | | | | |
| 15 | Example of disclosure | 3.95 | 0.39 | | | 1.37 | | | | | | | | | 27.46 |
| 16 | Example of disclosure | 7.75 | 0.48 | | | | 6.22 | | 1.87 | | | | 22.33 | | |
| 17 | Example of disclosure | 3.13 | 0.52 | | | 0.78 | | | | | | 17.50 | | | |
| 18 | Example of disclosure | 1.60 | 5.70 | 0.01 | 2.00 | 0.16 | 0.11 | 1.54 | 1.92 | 12.13 | | | | | 24.32 |
| 19 | Example of disclosure | 1.60 | 9.11 | 0.01 | 2.00 | 0.16 | 0.11 | 1.54 | 1.92 | 12.13 | | | | | 24.32 |
| 20 | Example of disclosure | 7.85 | 5.82 | | 0.91 | | | 1.34 | 0.95 | 17.10 | | | | | |
| 21 | Example of disclosure | 4.95 | 12.00 | | | 0.01 | | | | | | | 5.00 | | |
| 22 | Example of disclosure | 5.68 | | | 0.43 | 4.02 | 6.67 | | 1.33 | | | | 4.33 | | |
| 23 | Example of disclosure | 7.80 | 5.59 | | 0.89 | | | 1.42 | 0.98 | 16.87 | | | | | |
| 24 | Example of disclosure | 7.85 | 0.57 | | | | 5.25 | | | | | | | | |
| 25 | Example of disclosure | 3.90 | | | | 2.43 | | | | 6.97 | | | | | |

(continued)

| Wire No. | Classification | Oxide | | | | | | | | Fluoride | | | | | |
|---|---|---|---|---|---|---|---|---|---|---|---|---|---|---|---|
| | | $TiO_2$ | $SiO_2$ | $ZrO_2$ | $Al_2O_3$ | MgO | CaO | $Na_2O$ | $K_2O$ | $CaF_2$ | $K_2SiF_6$ | $K_2ZrF_6$ | NaF | $Na_3AlF_6$ | $MgF_2$ |
| 26 | Example of disclosure | 1.60 | 9.11 | 0.01 | 2.00 | 0.16 | 0.11 | 1.54 | 1.92 | 12.13 | | | | | 27.66 |
| 27 | Example of disclosure | 5.80 | 0.35 | 0.74 | | | | 1.50 | | 13.00 | 8.87 | | | 12.00 | |
| 28 | Example of disclosure | 5.49 | | 0.15 | | | | 2.52 | 0.02 | | | | 6.59 | | |
| 29 | Example of disclosure | 7.80 | 5.59 | | 0.89 | | | 1.42 | 0.98 | 16.87 | | | | | |
| 30 | Example of disclosure | 3.13 | 0.52 | | | 0.78 | | | | | | 3.00 | | | |
| A1 | Comparative Example | 7.15 | 24.59 | | | | | | | | | | | | |
| A2 | Comparative Example | 3.50 | | | | | | | | | | | | | |
| A3 | Comparative Example | 6.49 | | | | | | | | | | | | | |
| A4 | Comparative Example | 7.75 | 0.48 | | | | 6.22 | | 1.87 | | | | 22.33 | | |

[Table 2-D]

| Wire No. | Classification | Metal carbonate | | | | | Sum X |
|---|---|---|---|---|---|---|---|
| | | $CaCO_3$ | $BaCO_3$ | $MgCO_3$ | $Li_2CO_3$ | Total of carbonates | |
| 1 | Example of disclosure | 72.41 | 8.00 | | | 80.41 | 85.64 |
| 2 | Example of disclosure | 42.35 | | | | 42.35 | 70.63 |
| 3 | Example of disclosure | 70.82 | 8.00 | | | 78.82 | 84.05 |
| 4 | Example of disclosure | 5.72 | | | | 5.72 | 17.80 |
| 5 | Example of disclosure | 10.47 | 8.00 | 8.00 | 8.00 | 34.47 | 42.66 |
| 6 | Example of disclosure | 39.26 | | | | 39.26 | 65.05 |
| 7 | Example of disclosure | 30.36 | | | 5.74 | 36.10 | 67.84 |
| 8 | Example of disclosure | 22.73 | | 8.00 | | 30.73 | 65.31 |
| 9 | Example of disclosure | 39.67 | | | | 39.67 | 44.74 |
| 10 | Example of disclosure | 28.32 | 8.00 | 8.00 | | 44.32 | 52.11 |
| 11 | Example of disclosure | 28.56 | | 13.63 | | 42.19 | 53.17 |
| 12 | Example of disclosure | 53.77 | | | 8.80 | 62.57 | 87.15 |
| 13 | Example of disclosure | 42.28 | | | | 42.28 | 80.45 |
| 14 | Example of disclosure | 49.42 | 5.74 | | | 55.16 | 76.55 |
| 15 | Example of disclosure | 12.25 | | | | 12.25 | 17.96 |
| 16 | Example of disclosure | 26.26 | | | | 26.26 | 42.58 |
| 17 | Example of disclosure | 38.81 | | | 5.41 | 44.22 | 48.65 |
| 18 | Example of disclosure | 11.25 | | 7.94 | | 19.19 | 44.35 |
| 19 | Example of disclosure | 23.33 | | 7.94 | | 31.27 | 59.84 |
| 20 | Example of disclosure | 47.20 | | | | 47.20 | 81.18 |
| 21 | Example of disclosure | 11.59 | | | 7.93 | 19.52 | 36.48 |
| 22 | Example of disclosure | 43.68 | 2.00 | | | 45.68 | 63.81 |
| 23 | Example of disclosure | 47.12 | | | | 47.12 | 80.67 |
| 24 | Example of disclosure | 25.54 | | | | 25.54 | 39.21 |
| 25 | Example of disclosure | 3.61 | 11.92 | | 5.80 | 21.33 | 34.63 |
| 26 | Example of disclosure | 17.26 | | 12.00 | | 29.26 | 57.83 |
| 27 | Example of disclosure | 49.28 | 5.74 | | | 55.02 | 76.41 |
| 28 | Example of disclosure | 35.39 | 8.00 | 8.00 | 8.00 | 59.39 | 67.58 |
| 29 | Example of disclosure | 47.12 | | | | 47.12 | 80.67 |
| 30 | Example of disclosure | 25.54 | | | 5.41 | 30.95 | 35.38 |
| A1 | Comparative Example | 30.36 | | | 5.74 | 36.10 | 67.84 |
| A2 | Comparative Example | 93.23 | | | | 93.23 | 96.73 |
| A3 | Comparative Example | 85.69 | | | | 85.69 | 92.18 |
| A4 | Comparative Example | 58.08 | | | | 58.08 | 74.40 |

The balance (that is, components other than the respective components shown in the table) of the core wire shown in Tables 1-A and 1-B and the balance (that is, components other than the respective components shown in the table) of the shielded metal arc welding rod shown in Tables 2-A, 2-B, 2-C, and 2-D are iron and impurities.

In Tables 1-A and 1-B, numerical values outside the range defined in the disclosure are underlined.

In Tables 1-A, 1-B, 2-A, 2-B, 2-C, and 2-D, blanks in the tables related to the contents of chemical components, compounds, and the like means that the contents of the chemical components, compounds, and the like are less than the number of significant digits. These chemical components, compounds, and the like may be inevitably mixed or generated at a content less than the number of significant digits.

[Evaluation]

Evaluation was performed by performing gas shield arc welding by vertical upward welding using the shielded metal arc welding rods of examples of the disclosure and comparative examples. Specifically, evaluation was performed by the method described below.

As a steel plate to be welded, 9% Ni steel (steel plate according to JIS G 3127:2013 SL9N590) having a plate thickness of 50 mm was used. In the evaluation, all the welding currents were set to alternate current.

The welding conditions for the evaluation were the conditions shown in Table 3.

[Table 3]

| Current A | Voltage V | Rate mm/min | Heat input kJ/mm |
|---|---|---|---|
| 140 | 22 | 160 | 1.2 |

(Evaluation of Fume Amount)

The amount of fumes during gas shield arc welding using the shielded metal arc welding rods of examples of the disclosure and comparative examples was evaluated.

The measurement of the amount of fumes generated by welding was performed by a total amount collection method using a high-volume air sampler in accordance with JIS Z3930:2013 (Determination of fume emission rate during arc welding). A shielded metal arc welding rod having a fume amount of 1000 mg/min or less was rated as "passed" with respect to the amount of fumes, and a shielded metal arc welding rod having a fume amount of more than 1000 mg/min was rated as "failed".

(Evaluation of Low-Temperature Toughness)

Using the shielded metal arc welding rods of examples of the disclosure and comparative examples, the steel plate was subjected to gas shield arc welding, and three impact test pieces (V-notch test pieces having a notch depth of 2 mm) were taken from the center of the weld metal in a plate thickness direction.

The three impact test pieces were subjected to a Charpy impact test in accordance with JIS Z2242:2005 at -196°C.

A case where a Charpy absorbed energy average value of the three impact test pieces at -196°C was 34 J or more was rated as "excellent", a case where a Charpy absorbed energy average value thereof was 27 J or more and less than 34 J was rated as "passed", and a case where a Charpy absorbed energy average value thereof was less than 27 J was rated as "failed".

(Comprehensive Evaluation)

A case where both of the evaluation of the amount of fumes and the evaluation of the low-temperature toughness were "excellent" or "passed" was evaluated as "passed", and a case where any one of the evaluation of the amount of fumes or the evaluation of the low-temperature toughness was "failed" was evaluated as "failed".

[Table 4]

| Wire No. | Classification | Amount of fumes | Low-temperature toughness | Comprehensive determination |
|---|---|---|---|---|
| 1 | Example of disclosure | Passed | Excellent | Passed |
| 2 | Example of disclosure | Passed | Excellent | Passed |
| 3 | Example of disclosure | Passed | Excellent | Passed |
| 4 | Example of disclosure | Passed | Excellent | Passed |
| 5 | Example of disclosure | Passed | Excellent | Passed |
| 6 | Example of disclosure | Passed | Passed | Passed |

(continued)

| Wire No. | Classification | Amount of fumes | Low-temperature toughness | Comprehensive determination |
|---|---|---|---|---|
| 7 | Example of disclosure | Passed | Excellent | Passed |
| 8 | Example of disclosure | Passed | Excellent | Passed |
| 9 | Example of disclosure | Passed | Excellent | Passed |
| 10 | Example of disclosure | Passed | Excellent | Passed |
| 11 | Example of disclosure | Passed | Passed | Passed |
| 12 | Example of disclosure | Passed | Excellent | Passed |
| 13 | Example of disclosure | Passed | Excellent | Passed |
| 14 | Example of disclosure | Passed | Passed | Passed |
| 15 | Example of disclosure | Passed | Passed | Passed |
| 16 | Example of disclosure | Passed | Excellent | Passed |
| 17 | Example of disclosure | Passed | Excellent | Passed |
| 18 | Example of disclosure | Passed | Excellent | Passed |
| 19 | Example of disclosure | Passed | Excellent | Passed |
| 20 | Example of disclosure | Passed | Excellent | Passed |
| 21 | Example of disclosure | Passed | Passed | Passed |
| 22 | Example of disclosure | Passed | Excellent | Passed |
| 23 | Example of disclosure | Passed | Excellent | Passed |
| 24 | Example of disclosure | Passed | Excellent | Passed |
| 25 | Example of disclosure | Passed | Excellent | Passed |
| 26 | Example of disclosure | Passed | Excellent | Passed |
| 27 | Example of disclosure | Passed | Passed | Passed |
| 28 | Example of disclosure | Passed | Passed | Passed |
| 29 | Example of disclosure | Passed | Excellent | Passed |
| 30 | Example of disclosure | Passed | Excellent | Passed |
| A1 | Comparative Example | Failed | Failed | Failed |
| A2 | Comparative Example | Failed | Failed | Failed |
| A3 | Comparative Example | Failed | Failed | Failed |
| A4 | Comparative Example | Failed | Failed | Failed |

It is found that the shielded metal arc welding rod of the example of the disclosure has a small amount of fumes and is excellent in the low-temperature toughness of the resulting weld metal.

On the other hand, the comparative example did not satisfy any of the requirements specified in the disclosure, and thus failed in one or more evaluation items.

**Claims**

1. A shielded metal arc welding rod comprising:

  a core wire made of steel; and
  a flux coating the core wire,
  wherein a chemical component of the core wire consists of, by mass% with respect to a total mass of the core wire:

C: from 0% to 0.650%,
Si: from 0.03% to 0.50%,
Mn: from 2.1% to 30.0%,
P: from 0% to 0.050%,
S: from 0% to 0.050%,
Cu: from 0% to 5.0%,
Ni: from 1.0% to 30.0%,
Cr: from 0% to 10.0%,
Mo: from 0% to 10.0%,
Nb: from 0% to 1.00%,
V: from 0% to 1.00%,
Co: from 0% to 1.00%,
Pb: from 0% to 1.00%,
Sn: from 0% to 1.00%,
Al: from 0% to 0.10%,
Ti: from 0% to 0.10%,
B: from 0% to 0.1000%,
N: from 0% to 0.5000%,
O: from 0% to 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc in the core wire as determined by a magnetic induction method is 70% or more.

2. The shielded metal arc welding rod according to claim 1, wherein a mass ratio (Ni/Mn) of the content of the Mn and the content of the Ni is 0.10 or more.

3. The shielded metal arc welding rod according to claim 2, wherein the mass ratio (Ni/Mn) is 1.00 or more.

4. The shielded metal arc welding rod according to any one of claims 1 to 3, wherein a content of the Ti is Ti: from 0.003% to 0.10%.

5. The shielded metal arc welding rod according to any one of claims 1 to 4, wherein a chemical component of the flux includes, by mass% with respect to a total mass of the flux,

a total of $TiO_2$-equivalent values of a Ti oxide: from 0% to 25.00%,
a total of $SiO_2$-equivalent values of a Si oxide: from 0% to 25.00%,
a total of $ZrO_2$-equivalent values of a Zr oxide: from 0% to 5.00%,
a total of $Al_2O_3$-equivalent values of an Al oxide: from 0% to 5.00%,
a total of MgO-equivalent values of a Mg oxide: from 0% to 5.00%,
a total of CaO-equivalent values of a Ca oxide: from 0% to 25.00%,
a total of $Na_2O$-equivalent values of a Na oxide: from 0% to 5.00%,
a total of $K_2O$-equivalent values of a K oxide: from 0% to 5.00%,
$CaF_2$: from 0% to 30.00%,
$CaCO_3$: from 0% to 60.00%,
$BaCO_3$: from 0% to 15.00%,
$MgCO_3$: from 0% to 15.00%, and
$Li_2CO_3$: from 0% to 15.00%,
wherein a metal component in the chemical component of the flux consists of, by mass% with respect to the total mass of the flux:

C: from 0.020% to 5.000%,
Si: from 0% to 5.00%,
Mn: from 0% to 30.00%,
P: from 0% to 0.050%,

S: from 0% to 0.050%,
Cu: from 0% to 20.0%,
Ni: from 0% to 20.0%,
Cr: from 0% to 20.0%,
Mo: from 0% to 10.0%,
Nb: from 0% to 5.00%,
V: from 0% to 5.0%,
Co: from 0% to 1.00%,
Pb: from 0% to 1.00%,
Sn: from 0% to 1.00%,
W: from 0% to 20.0%,
Mg: from 0% to 5.00%,
Al: from 0% to 5.0%,
Ca: from 0% to 5.00%,
Ti: from 0% to 5.000%,
B: from 0% to 5.0000%,
REM: from 0% to 5.00%,
Bi: from 0% to 5.000%,
N: from 0% to 5.0000%, and
balance: Fe and impurities, and
wherein a total content of the $CaCO_3$, the $BaCO_3$, the $MgCO_3$, and the $Li_2CO_3$ is 5.00% or more.

6. The shielded metal arc welding rod according to claim 5, wherein a total (Mn + Ni) of a content of the Mn and a content of the Ni in the flux is 1.00% or more.

7. The shielded metal arc welding rod according to claim 5 or 6, wherein a sum X of the total of $TiO_2$-equivalent values of the Ti oxide, the total of $SiO_2$-equivalent values of the Si oxide, the total of $ZrO_2$-equivalent values of the Zr oxide, the total of $Al_2O_3$-equivalent values of the Al oxide, the total of MgO-equivalent values of the Mg oxide, the total of CaO-equivalent values of the Ca oxide, the total of $Na_2O$-equivalent values of the Na oxide, the total of $K_2O$-equivalent values of the K oxide, a content of the $CaF_2$, a content of the $CaCO_3$, a content of the $BaCO_3$, a content of the $MgCO_3$, and a content of the $Li_2CO_3$ is 94.98% or less.

8. The shielded metal arc welding rod according to any one of claims 1 to 7, wherein an average thickness of the flux is 5.0 mm or less.

9. A method of manufacturing a welded joint, comprising a step of welding a steel material by using the shielded metal arc welding rod according to any one of claims 1 to 8.

## INTERNATIONAL SEARCH REPORT

| International application No. |
| --- |
| **PCT/JP2022/036864** |

**A. CLASSIFICATION OF SUBJECT MATTER**

**B23K 35/30**(2006.01)i
FI:   B23K35/30 330C

According to International Patent Classification (IPC) or to both national classification and IPC

**B. FIELDS SEARCHED**

Minimum documentation searched (classification system followed by classification symbols)

B23K35/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | CN 113547254 A (WUHAN TEMO WELDING CONSUMABLES CO., LTD.) 26 October 2021 (2021-10-26) paragraphs [0032]-[0042] | 1-2, 5-7, 9 |
| Y | paragraphs [0032]-[0042] | 4-9 |
| A | paragraphs [0032]-[0042] | 3 |
| Y | JP 60-37290 A (SHIN NIPPON SEITETSU KK) 26 February 1985 (1985-02-26) page 2, lower right column, lines 13-17, table 1 | 4-9 |
| A | JP 2-205293 A (SHIN NIPPON SEITETSU KK) 15 August 1990 (1990-08-15) entire text, all drawings | 1-9 |

☐ Further documents are listed in the continuation of Box C.       ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 December 2022** | **20 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/036864**

| Patent document cited in search report | | | Publication date (day/month/year) | Patent family member(s) | Publication date (day/month/year) |
|---|---|---|---|---|---|
| CN | 113547254 | A | 26 October 2021 | (Family: none) | |
| JP | 60-37290 | A | 26 February 1985 | (Family: none) | |
| JP | 2-205293 | A | 15 August 1990 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008246507 A